# EUROPEAN PATENT SPECIFICATION

(11) **EP 3 453 070 B1**
(45) Date of publication and mention of the grant of the patent: **20.04.2022**
(21) Application number: 16728125.2
(22) Date of filing: 03.05.2016
(51) Int. Cl.: H01P 1/04

(54) **AN ARRANGEMENT FOR INTERCONNECTION OF WAVEGUIDE STRUCTURES AND A STRUCTURE FOR A WAVEGUIDE STRUCTURE INTERCONNECTING ARRANGEMENT**
ANORDNUNG ZUR VERBINDUNG VON WELLENLEITERSTRUKTUREN UND EINE STRUKTUR FÜR EINE WELLENLEITERSTRUKTURVERBINDUNGSANORDNUNG
AGENCEMENT PERMETTANT L'INTERCONNEXION DE STRUCTURES DE GUIDE D'ONDES ET STRUCTURE PERMETTANT UN AGENCEMENT D'INTERCONNEXION DE STRUCTURES DE GUIDE D'ONDES

(43) Date of publication of application: 13.03.2019
(73) Proprietor: Gapwaves AB, 414 51 Göteborg (SE)
(72) Inventor: CARLRED, Simon, 421 39 Västra Frölunda (SE); ALFONSO ALÓS, Esperanza, 426 50 Västra Frölunda (SE)
(74) Representative: Lind Edlund Kenamets Intellectual Property AB
(86) International application number: PCT/SE2016/050387
(87) International publication number: WO 2017/192071

(56) References cited:
- WO-A2-2014/174494
- US-A1- 2011 032 057
- RAHIMINEJAD SOFIA ET AL: "Polymer Gap Adapter for Contactless, Robust, and Fast Measurements at 220-325 GHz", JOURNAL OF MICROELECTROMECHANICAL SYSTEMS, vol. 25, no. 1, 1 February 2016 (2016-02-01), pages 160-169, XP011597857, IEEE SERVICE CENTER, US ISSN: 1057-7157, DOI: 10.1109/JMEMS.2015.2500277 [retrieved on 2016-02-01]
- PUCCI E ET AL: "Contactless Non-Leaking Waveguide Flange Realized by Bed of Nails for Millimeter Wave Applications", PROCEEDINGS OF THE 2012 6TH EUROPEAN CONFERENCE ON ANTENNAS AND PROPAGATION (EUCAP), 2012, pages 3533-3536, XP002766268, IEEE PISCATAWAY, NJ, USA DOI: 10.1109/EUCAP.2012.6206199 ISBN: 978-1-4577-0918-0 cited in the application
- FAN FANGFANG ET AL: "Half-height pins - a new pin form in gap waveguide for easy manufacturing", 2016 10TH EUROPEAN CONFERENCE ON ANTENNAS AND PROPAGATION (EUCAP), EUROPEAN ASSOCIATION OF ANTENNAS AND PROPAGATION, 10 April 2016 (2016-04-10), pages 1-4, XP032906934, DOI: 10.1109/EUCAP.2016.7481931
- VOSOOGH ABBAS ET AL: "A multi-layer gap waveguide array antenna suitable for manufactured by die-sink EDM", 2016 10TH EUROPEAN CONFERENCE ON ANTENNAS AND PROPAGATION (EUCAP), EUROPEAN ASSOCIATION OF ANTENNAS AND PROPAGATION, 10 April 2016 (2016-04-10), pages 1-4, XP032906215, DOI: 10.1109/EUCAP.2016.7481259
- PUCCI E ET AL: "Contactless Non-Leaking Waveguide Flange Realized by Bed of Nails for Millimeter Wave Applications", ANTENNAS AND PROPAGATION (EUCAP), 2012 6TH EUROPEAN CONFERENCE ON, , pages 3533-3536, XP002766268, DOI: 10.1109/EUCAP.2012.6206199 Retrieved from the Internet: URL:http://ieeexplore.ieee.org/document/62 06199/ [retrieved on 2012-01-01]

## Description

### TECHNICAL FIELD

The present invention relates to an arrangement for interconnection of waveguide structures having the features of the first part of claim 1. The invention relates to arrangements for use in the high, or very high, frequency region, e.g. above 30 GHz, or even above 300 GHz, but also for frequencies below 30 GHz.

The invention also relates to a structure for an arrangement for interconnecting waveguide structures according to the first part of claim 36.

### BACKGROUND

For measuring and/or analysing microwave or millimetre circuits and devices of different kinds, e.g. from filters, amplifiers etc. to much more complex multifunction systems, but also for other purposes, waveguide structures need to be interconnected, and normally so called waveguide flanges are used as transitions. The requirements on a good conductive contact between waveguide flange surfaces are high. Unless the conductive contact is very good, currents will flow between the flanges, resulting in a leakage, mismatch and losses which will reduce the performance of the circuit, and produce incorrect results in the case of measurements and calibrations, particularly at high frequencies. In order to assure a good conductive, electrical, contact, waveguide flanges need to be tightly and evenly connected to each other, e.g. a waveguide flange has to be tightly and evenly connected to a device under test or to a calibration arrangement. In addition, an extremely good waveguide machining is required in order to assure a good alignment between waveguide flanges. These are difficult and time-consuming operations, in particular if several measurements need to be done, and may lead to incorrectly attached systems.

In E. Pucci, P.-S. Kildal, "Contactless Non-Leaking waveguide flange Realized by Bed of Nails for millimetre wave Applications", 6th European Conference on Antennas and Propagation (EUCAP), pp.3533-3536, Prague, March 2012, a waveguide flange which is realized by a bed of pins, and working between 190 and 320 GHz is proposed. This flange, with a pin structure or a textured surface does not require a conductive contact when connected to a standard waveguide, which facilitates fabrication and mounting. The screws need not be tightened very well and it is not needed to assure a good electrical contact as is the case with standard waveguide flanges. However, it is a disadvantage that it may still be a difficult and a time consuming operation to fasten the screws to connect the waveguide flange, even if the requirements as to tightening the screws are reduced, and similarly it is time consuming to loosen, remove, the screws at disconnection.

In S. Rahiminejad, E. Pucci, V. Vassilev, P.-S. Kildal, S. Haasl, P. Enoksson, "Polymer Gap adapter for contactless, Robust, and fast Measurements at 220-325 GHz", Journal of Microelectromechanical Systems, Vol.25, No.1, February 2016,a double-sided pin-flange gap adapter is disclosed which is to be placed between two flanges to avoid leakage. It is a drawback that mechanical contact still is required, although no electrical contact is needed. The mechanical contact is assured by means of screws as in other known arrangements, and it is a drawback that, if the screws are tightened too much, the adapter easily may be destroyed, or it can result in pin marks in the sensitive flange surfaces, which then may be ruined.

WO 2014/174494 discloses a system for connecting corrugated wave-guiding modules comprising an asexual, auto-aligning flange with corrugated structure and screws and/or dowels to prevent the structure from falling outside the flange's inner guiding shape.

Since, as also referred to above, particularly, but not exclusively, for high frequencies, e.g. from about 10 GHz, or particularly from 30 GHz up to about 1 THz, when connecting two waveguide flanges there is required a high quality of both mechanical and electrical, or at least mechanical, contact between them, in order to obtain a high quality, a repeatable and non-radiating interface, and a low loss interconnection, e.g. allowing a good calibration or a reliable measurement.

However, the flanges or adapters discussed above have shown not to be suitable for production and operation at e.g. 60 GHz, or from 50-75 GHz, which is a wide band. Actually, none of the designs are suitable for V-band flanges, which is a problem.

Further, in for example a typical calibration procedure the operator has to connect the flanges of calibration standards and ports of a VNA, Vector Network Analyzer, a plurality of times. This is a very time consuming, complicated and tedious task, due to all the screws needed to achieve a good contact between all joining flanges. It requires a stable and repeatable contact both mechanically and electrically, or at least mechanically, and therefore four screws should always used, but due to the time consuming and tedious work, sometimes for example only two of the required number of screws, e.g. four, required to ensure a good electrical contact, are actually tightened in practice. If the connection is not perfect, e.g. if there is a slight angular displacement or if there is not a perfect fit, there may be a leakage from the waveguide into free space, and also an increased reflection at the connection. A calibration procedure, as well as a measurement procedure, is based on all such connections being as perfect as possible.

Thus, although, through the solutions discussed above, the need for a conductive or electric contact between waveguide structures, or waveguide flanges, is removed, there is still a need for improvement as far as waveguide structure interconnecting arrangements are concerned. There is also a need for providing arrangements and structures appropriate for different and other frequency bands.

### SUMMARY

It is therefore an object of the present invention to provide an arrangement for interconnection of waveguide structures through which one or more of the above-mentioned problems can be overcome.

It is particularly an object to provide an arrangement for interconnection of waveguide structures, which is easy to use and operate.

It is also an object to provide an arrangement for interconnection of waveguide structures which enables interconnection in a fast and reliable manner with a minimum of interconnecting, e.g. screwing and unscrewing, operations for joining/disconnecting waveguide flanges, and facilitating interconnection e.g. for analysis, calibration or measurement of microwave or millimetre wave circuits or devices.

It is a particular object to provide an arrangement for interconnection of waveguide structures which can be used for high frequencies, e.g. above 10 GHz, or particularly above 30 GHz, but also for lower frequencies without any risk of reduced performance, measurement errors or calibration errors due to misalignment or leakage between interconnected waveguide structures, e.g. waveguide flanges.

It is a particular object to provide an arrangement, and a structure respectively, appropriate for different, and additional, frequency band, most particularly also for the frequency band 50-75 GHz, e.g. for 60 GHz, and even more particularly for interconnection of V-band flanges.

Particularly it is an object to provide an arrangement for interconnection of waveguide structures which is easy and cheap to fabricate.

It is a general object to provide an arrangement through which interconnection as well as disconnection of waveguide structures is facilitated.

It is also an object to provide an interconnecting arrangement, and a surface structure, which is robust and suitable for manufacture for different frequency bands, or independently of which is the desired frequency band.

Another object is to provide a flexible solution that can be implemented for interconnection of waveguide structures for operation in different desired frequency bands.

A most particular object is to provide an arrangement for interconnection of waveguide structures which is suitable for being used for interconnections e.g. in measurement systems for high as well as for low frequencies, in connection with different standard waveguides dimensions (such as WR15, WR12, .... WR3) and the corresponding standard waveguide flange dimensions, and for different and wide frequency bands.

A particular object is to provide an interconnection arrangement which can be used for interconnection of standard waveguide flanges.

A further particular object is to provide an interconnecting arrangement for connecting an analysing or measuring instrument to a waveguide calibration standard or a device under test in such a way that existing calibration standards can be used and such that connection/disconnection can be done in an easier and faster manner than before.

Therefore an interconnecting arrangement as initially referred to is provided which has the characterizing features of claim 1.

Advantageous embodiments are given by the respective appended dependent claims.

### BRIEF DESCRIPTION OF THE DRAWINGS

The invention will in the following be further described in a non-limiting manner, and with reference to the accompanying drawings, in which:
- Fig. 1: is a view of an arrangement for interconnection of waveguide structures comprising a flange adapter element according to a first embodiment of the present invention,
- Fig. 2: shows the flange adapter element of Fig. 1 as connected to a waveguide flange,
- Fig. 3A: shows the flange adapter element of Fig.1 arranged in a position between, and for interconnecting, two waveguide flanges,
- Fig. 3B: shows the flange adapter element of Fig.1 in a position between, and for interconnecting, two waveguide flanges as in Fig.3A with interconnecting elements comprising screws with magnetic heads screwed into the waveguide flanges,
- Fig. 3C: shows the flange adapter element of Fig.1 disposed between, and interconnecting, two waveguide flanges, i.e. in a state in which the waveguide structures are interconnected,
- Fig. 4: is a view in perspective of two waveguide flanges, each with two alignment pins and screw holes for interconnecting elements,
- Fig. 5A: shows an alternative embodiment of a flange adapter element adapted to be fixedly connected to a waveguide flange, and the waveguide flange to which it is connected,
- Fig. 5B: shows the flange adapter element connected to a waveguide flange of Fig. 5A in a position for interconnection with another waveguide flange,
- Fig. 6A: is a view in perspective of another embodiment of a flange adapter element which comprises protruding elements having a height corresponding to half the height of a total texture in a gap structure,
- Fig. 6B: is a top (also called front) view of the flange adapter element shown in Fig. 6A,
- Fig. 6C: is a side view of the flange adapter element in Fig. 6A,
- Fig. 7A: is a view in perspective of an interconnecting arrangement comprising two flange adapter elements provided with a periodic or quasi-periodic structure as in Fig.6A interconnecting two waveguide flanges,
- Fig. 7B: is a view in perspective as in Fig.7A, but in a non-interconnected state,
- Fig. 7C: is side view of the arrangement shown in Fig.7A in a non-interconnected state,
- Fig. 7D: is a cross-sectional side view of the arrangement shown in Fig.7A in an interconnected state,
- Fig. 8A: shows another embodiment of a flange adapter element comprising grooves and ridges arranged to form an elliptic pattern around the waveguide opening and forming the periodic or quasi-periodic structure,
- Fig. 8B: is a front view of the flange adapter element of Fig. 8A,
- Fig. 9A: is a view in perspective of a flange adapter element provided with a periodic or quasi-periodic structure comprising elliptically disposed grooves and ridges as in Fig.8A interconnecting two waveguide flanges,
- Fig. 9B: is a view in perspective of the interconnecting arrangement and the waveguide flanges shown in Fig.9A but in a non-interconnected state,
- Fig. 10A: is a view in perspective illustrating an exemplary structure comprising a periodic or quasi-periodic structure of a flange adapter element or a waveguide flange according to the invention,
- Fig. 10B: is a top view of the exemplary periodic or quasi-periodic structure of Fig.10A,
- Fig. 11: is a schematic view in perspective illustrating an alternative structure of a single-sided flange adapter or waveguide flange according to the invention,
- Fig. 12: is a schematic view in perspective showing an exemplary back-to-back flange adapter element with a structure as in Fig. 11,
- Fig. 13A: is a schematic view in perspective showing an alternative embodiment of a structure of a back-to-back flange adapter element according to the invention,
- Fig. 13B: is a schematic front (top) view of the flange adapter element structure shown in Fig. 13A,
- Fig. 14A: is a schematic view in perspective showing a back-to-back flange adapter element with a periodic or quasi-periodic structure or texture as shown in Fig 13A,
- Fig. 14B: is a front view of the flange adapter element of Fig. 14A,
- Fig. 15A: is a view in perspective showing four interconnecting elements according to an alternative embodiment,
- Fig. 15B: is a top view of the interconnecting elements of Fig. 15A,
- Fig. 15C: is a side view of the interconnecting elements of Fig. 15A,
- Fig. 16A: is a view in perspective of a waveguide flange to which the interconnecting elements of Fig. 15A are connected but without alignment pins, and
- Fig. 16B: is a view in perspective of a flange adapter element connected to a waveguide flange by means of interconnecting elements as in Fig.14A.

### DETAILED DESCRIPTION

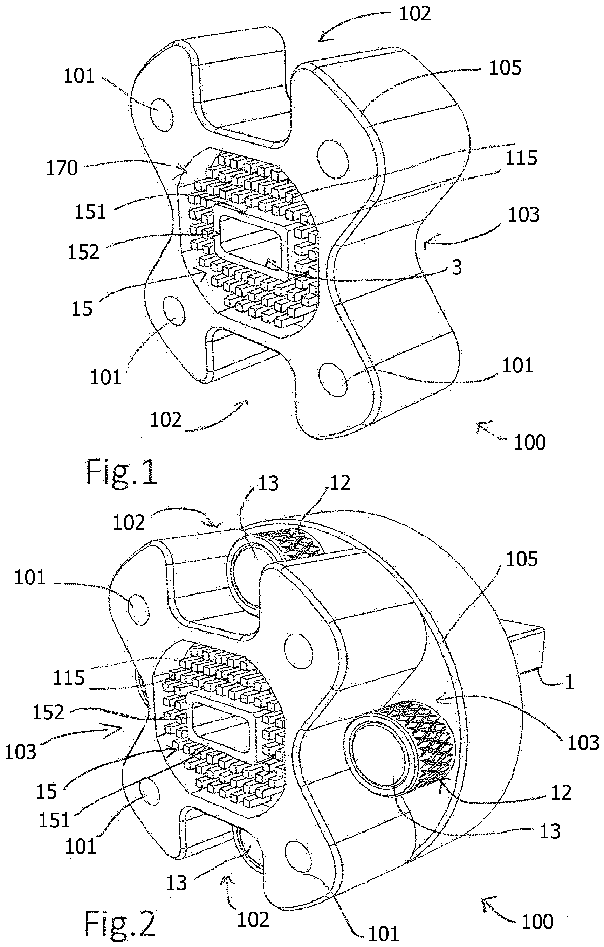

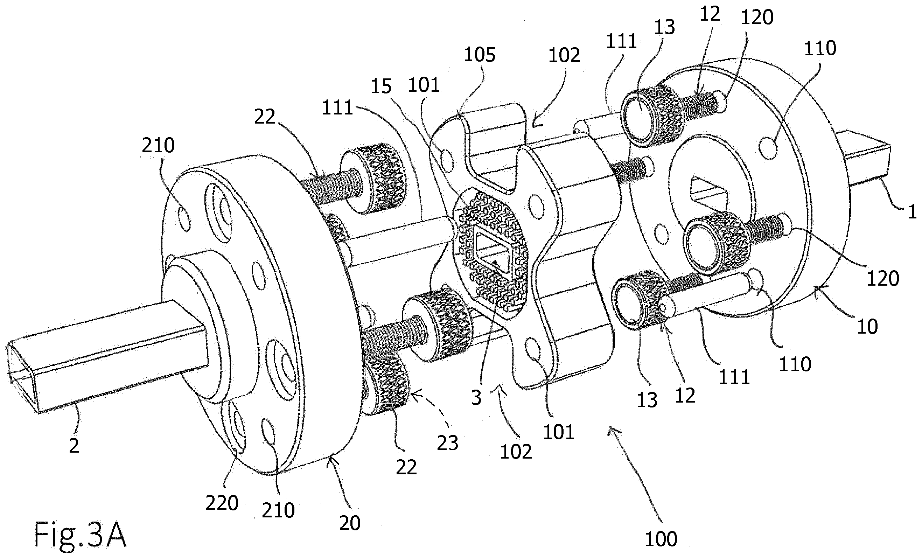

Fig. 1 shows a first embodiment of a waveguide structure interconnecting arrangement 100 according to the invention. The waveguide structure interconnecting arrangement 100 here comprises a flange adapter element adapted to be disposed between two waveguide flanges 10,20 (see e.g. Figs.2,3A). The flange adapter element 100 comprises a waveguide flange element with a textured surface 15 (also denoted a periodic or quasi-periodic structure) here comprising a number of protruding elements 115, e.g. pins, arranged on a conductive surface to form the periodic or quasi-periodic structure 15 on one side of the flange adapter element 100. The periodic or quasi-periodic structure 15 is arranged to surround a rectangular waveguide opening 3, of a through waveguide in the flange adapter element, on the cross-sectional sides of which metal rim sections or frame surfaces, also called ridges, are provided such that two long metal rim or ridge sections 151,151 are provided on the respective long, wide, sides of the waveguide opening 3 and two shorter rim or ridge sections 152,152 are provided on the short or narrow sides of the waveguide opening 3. The height of the rim or ridge sections 151,152 is here substantially the same as the height of the protruding elements 115 of the periodic or quasi-periodic structure 15. The longer rim or ridge sections 151,151 may e.g. have a width of about λ_{g}/4, λ being the wavelength in in the waveguide structure (not shown to scale in Figure 1 etc.), or e.g. about 400 µm, and serve the purpose of, together with an opposite smooth waveguide flange with which the flange adapter element 100 is to be interconnected, form an impedance transformer which transforms an open circuit to a short circuit to avoid leakage and reflections which may be created at the interface between the flange adapter element and the waveguide flange to which it is to be connected (see waveguide flange 20 in Fig.3A).

The flange adapter element 100 is adapted to provide an interconnection between two waveguide structures or components, e.g. also antennas, filters, receivers etc., 10,20 with conventional smooth waveguide flanges (see Figs.2,3A) as will further described below. A protective or supporting element, e.g. an outer rim 105, is disposed such as to surround the periodic or quasiperiodic structure 15, i.e. the textured surface. The purpose of said protective or supporting element 105 is to act as a protective distance element assuring that, when interconnecting or fastening elements press the textured surface 15 against a waveguide flange with which it is to be interconnected, the pressure will be exerted on said protective or supporting element 105, and the protruding elements 151 of the periodic or quasi-periodic structure will be protected. Further, since the protective or supporting element 105 is arranged to protrude a slight distance beyond the outer ends of the protruding elements 151, the presence of a gap will be assured, and the textured surface is prevented from coming into direct mechanical contact with the opposing waveguide flange when interconnected, which might lead to the textured surface and/or the smooth surface of the interconnecting waveguide flange being damaged or ruined. The flange adapter element 100 comprises a number of alignment pin receiving holes 101; in the shown embodiment four, each disposed on a respective wing or flange section protruding from a central section 170 of the flange adapter element 100 where the textured surface 15 is located, in directions perpendicular to the direction of extension of the protruding elements 151. The alignment pin receiving holes 101 serve the purpose of being adapted for receiving alignment pins (cf. e.g. Fig.3A) of waveguide flanges which are to be connected to the flange adapter element 100 such as to assure that the waveguide flanges and the flange adapter element are appropriately aligned, and hence the waveguide flanges 10,20 which are to be interconnected via the flange adapter element 100. Particularly the flange adapter element can slide on the alignment pins.

Between two respective, opposite, pairs of protruding wing or flange sections, two through recesses, here comprising waists, 103 are formed by flange adapter element side walls, perpendicular to the textured surface 15, and tapering towards a central region outside the textured surface 15 on respective sides thereof disposed outside the waveguide short walls 152. Between two respective, opposite, pairs of protruding wing or flange sections two through recesses 102 are formed by flange adapter side walls, which are perpendicular to the textured surface 15. The recesses 102 are here substantially U-shaped with a substantially straight section interconnecting the legs of the U:s and located outside the textured surface at locations extending substantially in parallel with the long sides of the waveguide opening 3. The waist shaped recesses 103 and the U-shaped recesses 102 are so shaped, and have such dimensions, as to allow an interconnecting element 12 (cf. e.g. Fig 2) to be located therein, e.g. connected to the surface of a respective waveguide flange 10,20, e.g. a standard waveguide flange, whereas the circumferential outer side walls of the wing or flange sections of the flange adapter element 100 are so shaped and have such dimensions as to correspond to the circumferential, peripheral, side walls of the respective waveguide flanges. The positions of the waists and U-shaped recesses are preferably so chosen that they correspond to locations where fastening screw holes are located in standard waveguide flanges.

The flange adapter element 100 preferably comprises a solid part made of brass, Cu, Al or any other appropriate material with a good conductivity, a low resistivity and an appropriate density. It may for example be plated with e.g. Au or Ag in environments where further corrosion protection is needed. It should be clear that also other materials can be used, e.g. any appropriate alloy. It can also be fabricated from a suitable plastic/polymer compound and plated with e.g. Cu, Au or Ag.

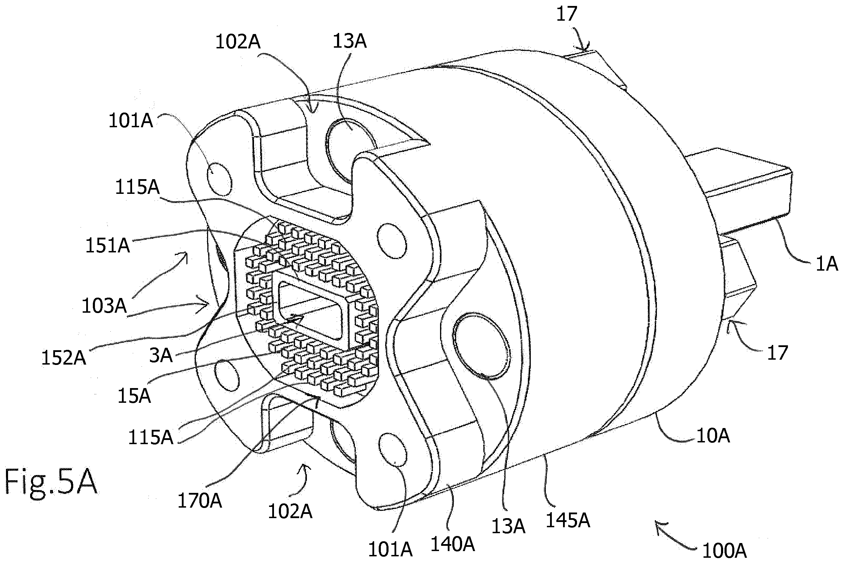

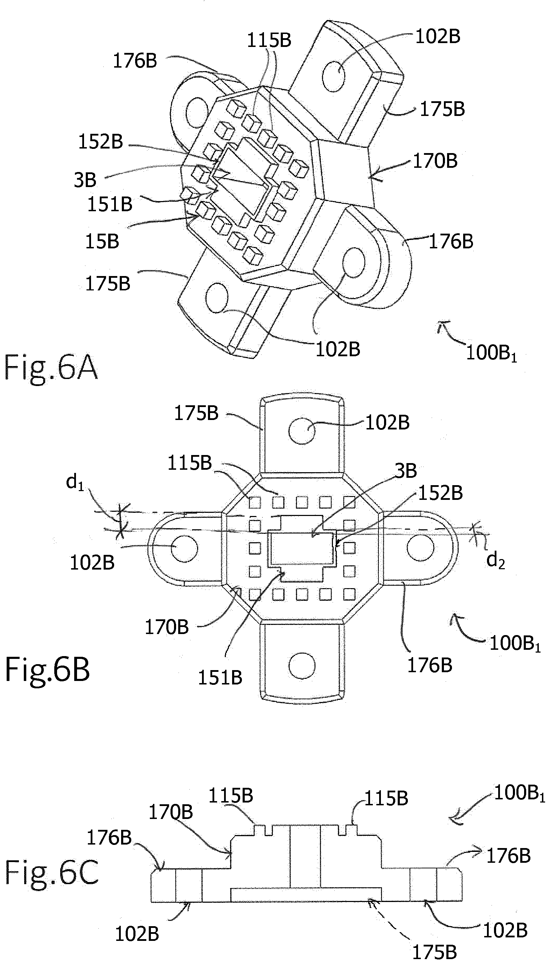

The flange adapter element 100 in the shown embodiment comprises a flange element on a central portion of which a periodical or quasi-periodic structure, also denoted a texture, 15 is disposed around the opening of a standard rectangular waveguide 3. It should be clear that in alternative embodiments the flange adapter element may have any other appropriate shape, allowing it to be connected between e.g. two waveguide flanges, a waveguide flange and an antenna or another device, a waveguide flange of a calibrating arrangement, a DUT (Device Under Test) etc. It may in different embodiments be provided as a separate flange adapter element, in other embodiments it may be adapted to be fixedly connected to a waveguide flange (cf. e.g. Fig. 5A), or in still other embodiments be adapted to be connected to another flange adapter element (cf. e.g. Fig.6A). It may also form a waveguide flange.

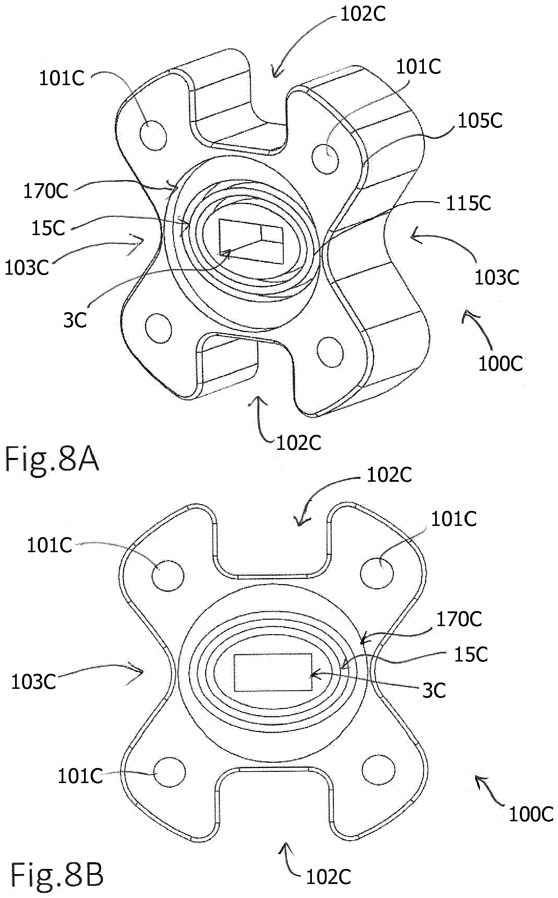

The texture, i.e. the periodic or quasi-periodic structure, 15 may e.g. comprise a structure comprising a plurality of protruding elements, e.g. pins 151 having a square shaped cross-section, but the protruding elements can also have other cross-sectional shapes such as circular or rectangular, comprise a corrugated structure, e.g. comprising elliptically disposed grooves and ridges as shown in Figs. 8A-9B. Other alternative shapes for corrugations are also possible.

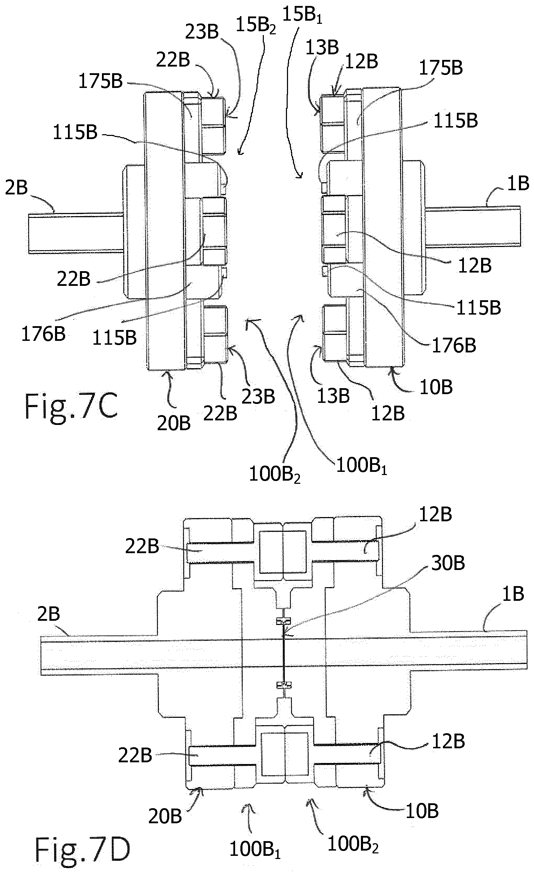

Through providing a connection between a conductive smooth flange surface or plane of a waveguide 20 (see Fig.3A) on one side and a flange surface with a periodic or quasi-periodic structure 15 on the other side, the two waveguides (e.g. a waveguide and a waveguide of an object to be measured or a waveguide of a calibration standard, a waveguide calibration standard and a VNA waveguide port etc.) can be connected without requiring electrical contact, but also without direct mechanical contact. The presence of a gap 30 (see in particular Fig. 7D), e.g. of air, or a gap filled with gas, vacuum, or at least partly with a dielectric material, between the two connecting flange surfaces is allowed since the periodic or quasi-periodic structure stops all kind of wave propagation between the two flange surfaces in all other directions than desired waveguiding paths. The periodic or quasi-periodic structure 15, or texture, is, as also referred to above, so designed that it stops propagation of waves inside the gap 30 in any direction, whereas waves are allowed to pass across the gap from the waveguide opening in one flange surface to the waveguide opening in the other, at least in the intended frequency band of operation. Thus, the shapes and dimensions and the arrangement of e.g. pins, posts, grooves, ridges etc. of the periodic or quasi-periodic structure are selected such as to prevent propagation of waves in any other direction than the intended direction.

The non-propagating or non-leaking characteristics between two surfaces of which one is provided with a periodic texture (structure), is known from P.-S. Kildal, E. Alfonso, A. Valero-Nogueira, E. Rajo-Iglesias, "Local metamaterial-based waveguides in gaps between parallel metal plates", IEEE Antennas and Wireless Propagation letters (AWPL), Volume 8, pp. 84-87, 2009 and several later publications by these authors. The non-propagating characteristic appears within a specific frequency band, referred to as a stopband. Therefore, the periodic texture and gap size must be designed to give a stopband that covers with the operating frequency band of the standard waveguide being considered in the calibration kit. It is also known that such stopbands can be provided by other types of periodic structures, as described in E. Rajo-Iglesias, P.-S. Kildal, "Numerical studies of bandwidth of parallel plate cut-off realized by bed of nails, corrugations and mushroom-type EBG for use in gap waveguides", IET Microwaves, Antennas & Propagation, Vol. 5, No 3, pp. 282-289, March 2011. These stopband characteristics are also used to form so called gap waveguides as described in Per-Simon Kildal, "Waveguides and transmission lines in gaps between parallel conducting surfaces", patent application No. PCT/EP2009/057743, 22 June 2009.

It must be emphasized that any of the periodic or quasi-periodic textures previously used or that will be used in gap waveguides also can be used in a waveguide structure interconnecting arrangement, a flange adapter element or flange structure of the present invention, and is covered by the patent claims.

The concept of using a periodic texture to improve waveguide flanges is known from P.-S. Kildal, "Contactless flanges and shielded probes", European patent application EP12168106.8, 15 May 2012.

According to the present invention, the two surfaces, e.g. the textured structure of the flange adapter element or a flange element, i.e. the plane formed by the free outer ends of the pins or ridges or similar of a periodic or quasiperiodic structure, and a smooth waveguide flange, or another textured surface, must not be separated more than a quarter of a wavelength of a transmitted signal, or rather have to be separated less than a quarter wavelength. This is thoroughly described in the above-mentioned publications, such as in particular in E. Rajo-Iglesias, P.-S. Kildal, "Numerical studies of bandwidth of parallel plate cut-off realized by bed of nails, corrugations and mushroom-type EBG for use in gap waveguides", IET Microwaves, Antennas & Propagation, Vol. 5, No 3, pp. 282-289, March 2011.

The periodic or quasi-periodic structure 15 in particular embodiments comprises an array of pins 151 with a cross section e.g. having the dimensions of 0.15λ × 0.15λ and a height of 0.15-0.25λ.

Through the provisioning of an interface formed by a smooth conductive surface of a waveguide flange 20 on one side of the interface and a textured surface 15 on the other side of the interface, power is prevented from leaking through the gap between the smooth conductive surface and the textured surface, or between two textured surfaces (see in particular embodiments described with reference to Figs.6A-7D). Propagation in non-desired directions is prohibited by means of a high impedance, resulting from the provisioning and arrangement of a periodic or quasi-periodic structure.

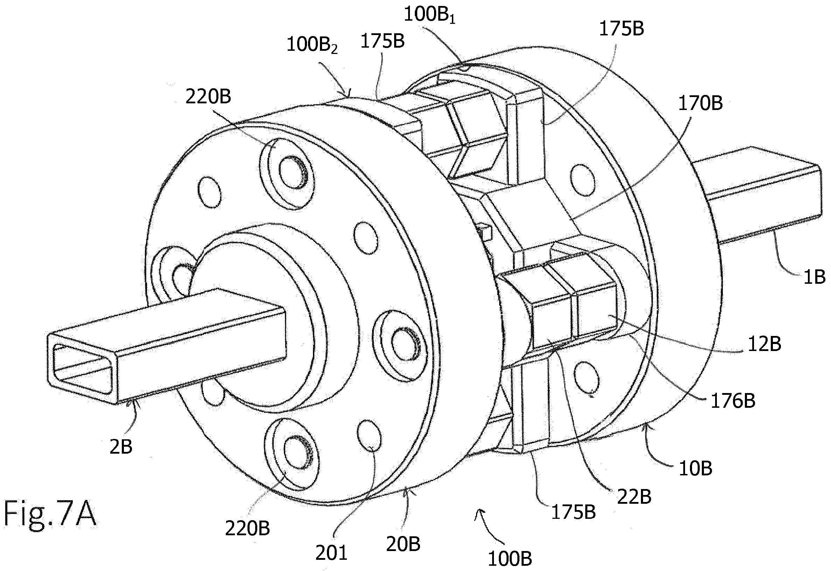

According to the invention, by using a combination of a surface comprising a periodic or quasi-periodic structure 15 and a waveguide flange 20 with a smooth conductive surface, or two surfaces each provided with a periodic structure (see e.g. Figs.7A-7D as discussed above) waveguides can hence be connected also without the surfaces having to be in electrical contact, and through the use of a protective or supportive rim 105 also no direct mechanical or physical contact is required which in turn relieves the requirement of a tight fastening by means of screws or similar to interconnect the surfaces, and the flange surfaces are protected.

Particularly the texture is designed to provide a stopband for waves leaking out between the two joining flanges, even when there is a small gap between the textured flange surface and the opposite flange surface, and also so that waves passing from the waveguide opening in one flange to the waveguide opening in the joining flange are not affected so that the transmission and the reflection from the joint is very close to the transmission and the reflection when conventional waveguide flanges are joined together, interconnected, very tightly by screws which are drawn very tight. As also referred to above, the texture can be made by pins, ridges or grooves etc. disposed around the waveguide opening in a pattern which is optimized to provide a good performance in terms of a low leakage, and improving, enhancing, the transmission coefficient which is reduced due to there being a discontinuity caused by the small gap between the two joining waveguides, and reducing the reflection coefficient which is increased due to there being a discontinuity caused by the small gap between the two joining waveguides.

PCT application PCT/SE2016/050277 with priority from Swedish patent application 1550412-9, filed on 4 April 2015 by the same Applicant as for the present application, shows an arrangement for connecting an analysing or measuring instrument to a waveguide calibration standard or a device under test, and a calibration arrangement for a tool or instrument for analysing or measuring microwave circuits or devices. It comprises a calibration connector element in the form of a disk or plate with a waveguide opening in it to be located between two joining waveguide flanges, allowing contactless connection between the two waveguide flanges, one of which being the port of the analysing or measuring instrument, e.g. a Vector Network Analyser (VNA), and the other being the port of either a waveguide calibration standard or a device under test. The calibration connector element comprises two surfaces, one on each side of it, each of which has a periodic or quasi-periodic structure around the waveguide opening forming a first and a second periodic or quasi-periodic structure. It is connectable between the waveguide flanges in such a way that on each side of it a gap is formed between the periodic or quasi-periodic structure and the smooth surface of the corresponding flange, hence allowing interchangeable contactless interconnection of a waveguide of the analysing or measuring instrument, e.g. a VNA, and a waveguide calibration standard or a device under test comprising a waveguide port.

Fig.2 shows the flange adapter element 100 of Fig.1 connected to a waveguide flange 10 of a first waveguide structure 1. The waveguide flange 10 is here supposed to be a standard waveguide flange, e.g. a V-band flange, a WR15 flange, or any other standard waveguide flange. Such a standard waveguide flange 10 normally comprises four alignment pin holes 110, not visible in Fig.2; cf. Fig.3A, for reception of alignment pins, and four screw holes 120 adapted for reception of fastening screws. According to the present invention the flange adapter element 100 is releasably connected to the standard waveguide flange 10 and aligned, and can slide, with respect thereto by means of two alignment pins introduced into two respective, oppositely disposed, alignment pin holes 110 of the standard waveguide flange 10 and the corresponding alignment pin holes 101 in the wing sections of the flange adapter element 100. Interconnecting elements 12 in the form of screws with heads with magnets 13, in the following also simply denoted magnetic screw heads, or magnetic elements on the screw heads, are introduced into the screw holes 120 of the standard waveguide flange 10, and the through recesses, waists 103 and U-shaped recesses 102, of flange adapter element 100 are so located and have such sizes as to allow reception of the screw heads 13. The height of the head of each screw 12 substantially corresponds to half the thickness of the flange adapter element 100. In some embodiments the magnetic elements comprise small elements fastened to the flat surface of the screw heads, e.g. by means of gluing or in any other appropriate manner as also will be further discussed below. The screw heads may also comprise magnetic head portions. Elements shown in Fig.2 which already have been described with reference to Fig.1 will not be further discussed with reference to Fig.2.

Fig.3A illustrates two waveguide structures 1,2, comprising two standard waveguide flanges 10,20 in a position for being interconnected by means of a flange adapter element 100 as described with reference to Figs 1,2. The flange adapter element 100 and the first standard waveguide flange 10 have already been described with reference to Figs. 1,2 and will therefore not be further described herein. The second standard waveguide flange 20 is in the shown embodiment similar to the first standard waveguide flange 10 and comprises four alignment pin holes 120 and four fastening element or screw holes 220. Two alignment pins 111 are in a positions for being introduced into two corresponding alignment pin holes 101,101 and 110,110 of the first standard waveguide flange 10 and the flange adapter element 100 respectively. The respective pin holes that are used for alignment of the flange 10 and the flange adapter element 100 are oppositely disposed, and the remaining two alignment pin holes 101,101 of the flange adapter element 100 are used for reception of two further alignment pins 111 which in the other ends are intended to be received in corresponding alignment pin holes 210,210 of the second waveguide flange 20. Four screws 12 with magnetic heads 13 are in a position for being introduced into four screw holes 120 of the first waveguide flange 10, and four other screws 22 with magnetic heads 23 are in a position for being introduced into four screw holes 220 of the second waveguide flange 20. The screws 12,22 with the magnetic heads 13,23 are so disposed that interconnection can be achieved by means of a snap-on like operation, clamping the flange adapter element 100 between the first and the second waveguide flanges 10,20. It is an advantage that the flange adapter element 100 can slide on the alignment pins 111 that the joining flanges are movable in relation to each other through the gap and in particular embodiments need not be centralized with respect to the stop band. In one embodiment the magnetic elements 13,23 comprise neodymium magnets, (NdFeB) which are strong permanent magnets. Of course also other magnetic materials with similar properties may be used, this is merely to be seen as an example. The surface may e.g. be Ni-plated or plated with some other appropriate material. In some embodiments the screw heads of conventional screws used for fastening of waveguide flanges are provided with small permanent magnets.

The flange adapter element particularly is solid and made in one piece in order not to influence the signal flow. It may e.g. be made by moulding, casting, ablation, material assembling, e.g. micro-assembling and cutting is another method.

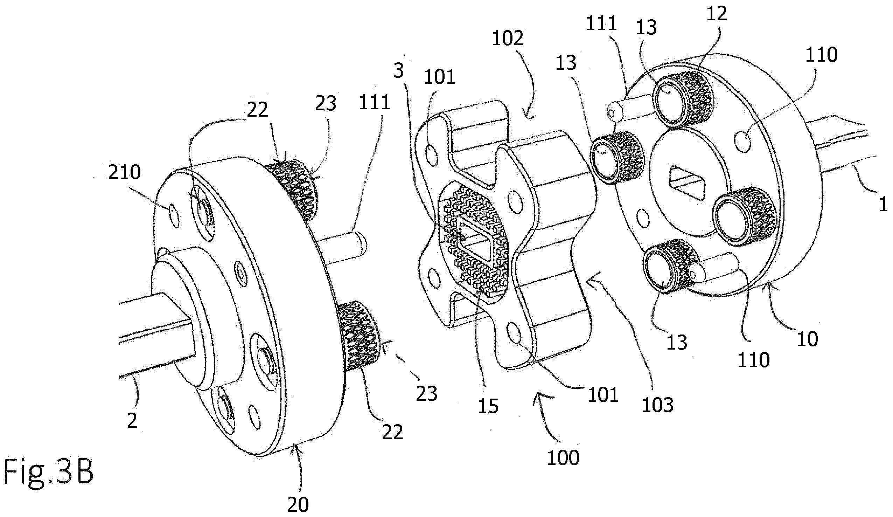

Fig. 3B illustrates the two waveguide structures 1,2, comprising two standard waveguide flanges 10,20 in a position for being interconnected by means of the flange adapter element 100 as in Fig.3A, but with the interconnecting elements, screws 12,22, introduced into the screw holes 120,220 of the first and second waveguide flanges 10,20. When the waveguide flanges 10,20 are brought in contact with the flange adapter element 100, with the screws 12,22 positioned in the recess sections, i.e. here the U-shaped recesses 102 and the waist sections 103, the waveguide flanges will be forced towards each other and be joined or interconnected by means of the magnetic force between the magnetic screw heads 13,23. Due to the alignment pins 111 the positioning will be accurate. Thus, interconnection takes place in an easy manner, like a snap-on operation. Although screws are still needed, they can e.g. easily be applied or introduced into the screw holes of the waveguide flanges 10,20 on beforehand. There is also no need to tighten any screws. Once the screws have been applied to the waveguide flanges, and they are brought in position on opposite sides of a flange adapter element 100, the interconnection will take place in an almost automatic manner without requiring any particular skill of the personnel handling the assembly. Thereby interconnection (joining), removal, replacement of waveguide structures, or waveguide flanges, is considerably facilitated and can be done in an easy and fast manner, with a high accuracy and without needing to exert strong forces resulting in the risk of ruining the textured surface, or the smooth surface of the opposing flange.

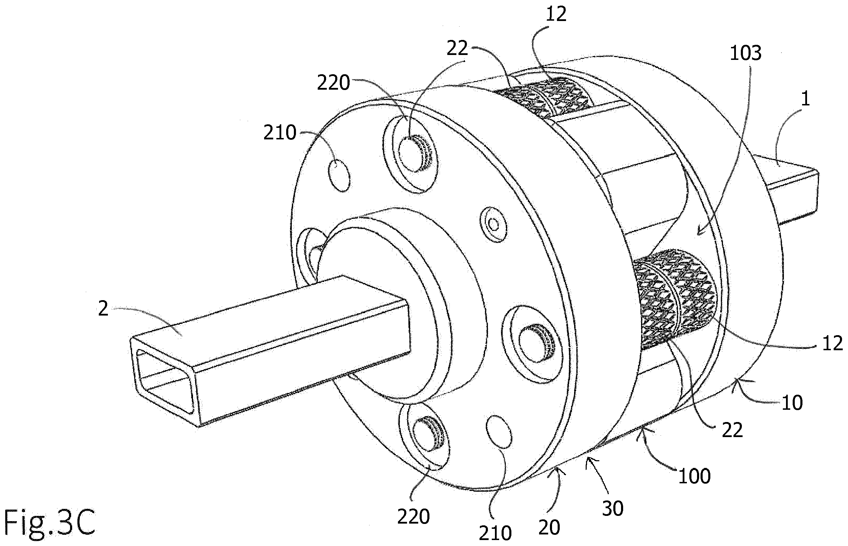

In Fig.3C a state in which the first and second waveguide flanges 10,20 are interconnected or joined by means of interposition of the flange adapter element 100 and held together by means of the magnetic heads 13,23 of the interconnecting screws 12,22, and aligned by means of the alignment pins 111 as discussed above. The slight gap between the periodic or quasi-periodic structure 15 and the smooth surface of the second waveguide flange 20 cannot be seen in Fig.3C due to the presence of the protective or supporting element 105 (see Fig.1) which is in contact with the smooth surface of the second waveguide flange 20.

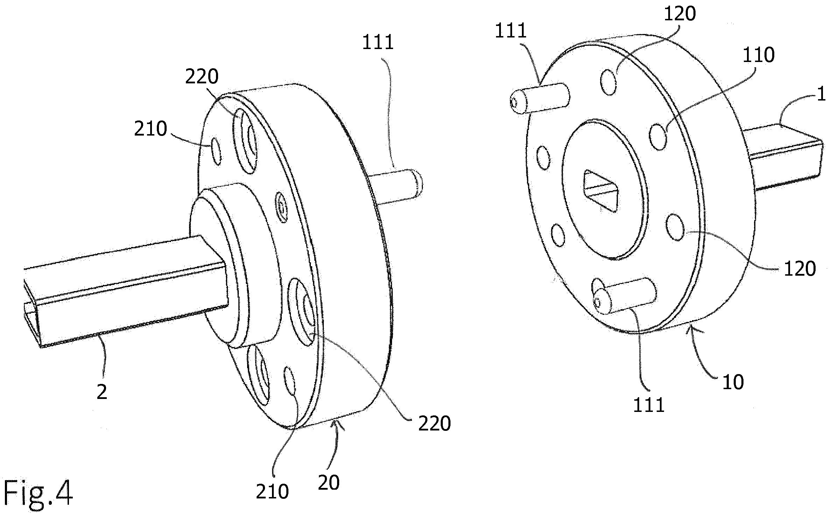

Fig. 4 is a schematic view in perspective serving the purpose of illustrating the first and second waveguide flanges 10,20, each with two alignment pins 111 introduced into two respective alignment pin holes 110,210. As can be seen two diametrically disposed alignment pin holes of each waveguide flange are used, and alignment pin holes with different positions are used in the first and second waveguide flanges 10,20, such that, when interconnected by means of flange adapter element, all four holes of the flange adapter element 100, whereas only two each of the alignment pin holes of the waveguide flanges 10,20 are used. In other respects the elements shown in Fig.4 have already been discussed with reference to the preceding figures.

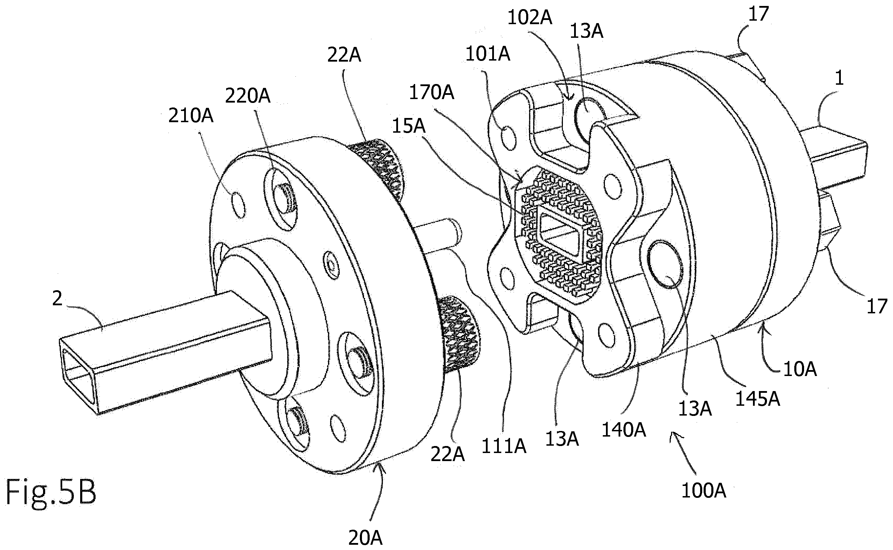

Fig.5A shows an alternative embodiment of a waveguide structure interconnecting arrangement 100A which here comprises a flange adapter element structure 100A adapted to be fixedly or releasably connected to a waveguide flange 10A, e.g. a standard waveguide flange 10A. It is fastened to the waveguide flange 10A by means of fastening screws 17 introduced into the waveguide flange 10A in a direction towards the waveguide flange adapter element 100A. The flange adapter element structure 100A comprises a waveguide adapter element main body 140A substantially as described with reference to Figs. 1-4, but which is integral with, or made in one piece with, or connected to, a flange adapter support element 145A preferably with the same cross section as a waveguide flange 10A and having a thickness allowing the first waveguide flange 10A to be fixedly (or removably) connected thereto by means of in the art conventional fastening screws 17. Alternatively the flange adapter element structure 100A can be connected to the waveguide flange 10A in any other appropriate manner, it might even be glued onto it in some embodiment alternative. In the through recess sections 102A,103A (here similar to the corresponding sections 102,103 described with reference to e.g. Figs.1 and 3A) and on a surface of the flange adapter support element 145A on which the part of the flange adapter element structure 100A is provided which correspond to the flange adapter element e.g. as described with reference to Fig.1, magnetic elements 13A are provided. In the shown embodiment the magnetic elements 13A are fixedly mounted in recesses designed therefore in the flange adapter support element 145A such as to not protrude from the outer surface of flange adapter support element 145A, i.e. contiguous therewith. For interconnection to a second waveguide flange (see Fig.5B) as described e.g. with reference to Figs.3A-3D, either screws with magnetic heads as in an embodiment described with reference to Figs 3A-3D would have to have heads with a thickness of approximately twice the thickness in order to allow interconnection, or the flange adapter element main body 140A would have to have a thickness of about half the thickness of the flange adapter element 100 in e.g. Fig.1, the flange adapter main body 140A being thinner. In still other embodiments (not shown) the magnetic elements 13A are disposed such as to be located at about half the height of the flange adapter element main body 140A, e.g. disposed on shoulders or similar on the surface of the flange adapter support element 145A. Still further the magnetic elements may have a height substantially corresponding to a magnetic screw head as described above or comprise a magnetic surface provided on mounting elements having substantially such a height. Many variations are possible.

Fig 5B illustrates the flange adapter element structure 100A of Fig. 5A as mounted on a first waveguide flange 10A in a position for being interconnected with a second waveguide flange 20A with a smooth surface as described with reference to Figs.3A-3D. Since the functioning as far as the interconnection or joining to a second waveguide flange 20A corresponds to that described with reference to Figs 3A-3D, this will not be further described herein.

It is an advantage that, allowing a flange adapter to be fastened, e.g. by screws, to a waveguide flange, it will be kept in place, there is no risk of losing it, it will not fall off etc.

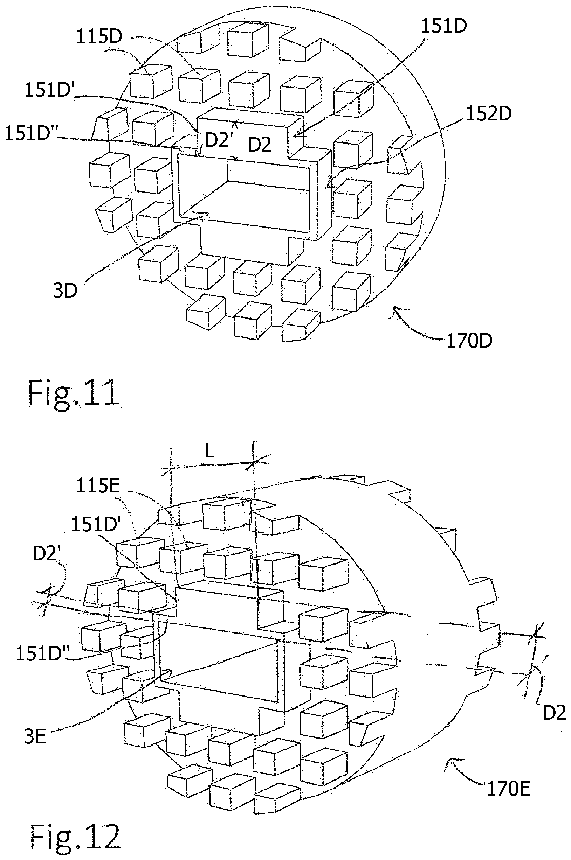

Fig.6A shows still another embodiment of a waveguide structure interconnecting arrangement 100B. The waveguide structure interconnecting arrangement 100B here comprises two flange adapter elements 100B₁,100B₂. In the embodiments shown in Figs 6A-7D the two flange adapter elements 100B₁,100B₂ are similar, and with reference to Figs.6A-6C therefore only one element is shown and described. The two flange adapter elements 100B₁,100B₂ are adapted to be disposed between, and, fixedly or detachably, connected to each a waveguide flange 10B,20B (see e.g. Fig.7A). The flange adapter element 100B₁ comprises a waveguide flange element with a textured surface 15B, here with a number of protruding elements 115B, e.g. pins, arranged on a conductive surface to form a periodic or quasi-periodic structure on one side of the flange adapter element 100B₁ as described with reference to the preceding embodiments. The periodic or quasi-periodic structure 15B is arranged to surround a rectangular waveguide opening 3B on the sides of which metal rim or ridge sections 151B,152B are provided. Two shorter rim or ridge sections 152B,152B are provided on the waveguide opening short or narrow sides. On each wide or long side of the waveguide opening 3B a long metal rim or ridge section 151B is provided. In the shown embodiment the long rim or ridge section 151B has a first a first wall thickness d₁ substantially being λ_{g}/4, λg being the wavelength in the waveguide structure, extending along the central, major, part of the waveguide wide or long side, and a second wall thickness d₂ width at the outer ends of the waveguide long side, wherein d₂ is smaller than d₁ (see Fig.6B). A reason for the different thicknesses is to improve the capability of covering a wide frequency band avoiding resonances within the band, see also Figs. 11-14B where the exemplary structure is more thoroughly discussed. In other embodiments, however, a same wall thickness may be used, e.g. as shown in Fig.1, although not to scale in Fig.1. Other alternatives are also possible.

The height of the frame or rim sections 151B,152B is substantially the same as the height of the protruding elements 115B of the periodic or quasi-periodic structure 15B.

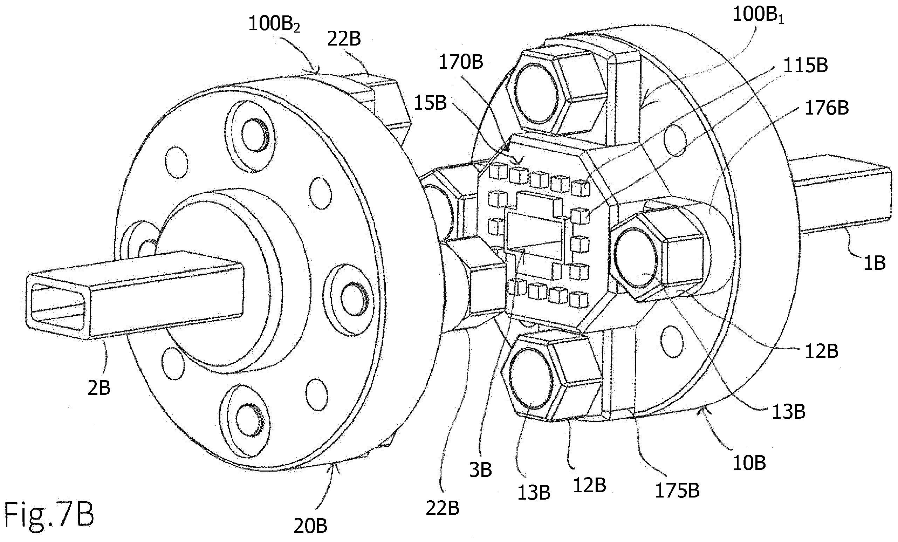

The flange adapter element 100B₁ is adapted be connectable, fixedly or removably, to e.g. a standard waveguide flange 10B (cf. Figs. 7A,7B) to, allow it to be joined or interconnected with a second, similar, flange adapter element 100B₂ connectable, fixedly or removably, to e.g. a second standard waveguide flange 20B, hence providing an interconnection between the two waveguide structures 1B,2B with conventional smooth waveguide flanges.

The flange adapter element 100B₁ comprises a central portion 170B provided with a periodic or quasi-periodic structure 15B comprising a plurality of protruding elements 115B, a textured surface, disposed around the opening of a standard rectangular waveguide opening 3B. In this embodiment the pins or protruding elements 115B each has a height, or length, corresponding to substantially half the total length of the pin or protruding element required to form the desired stop band. The total height is formed by the two flange adapter elements 100B₁,100B₂ disposed such that the textured surfaces face one another, and the total length being formed by two corresponding protruding elements 115B,115B, one on each flange adapter element (see Figs.7A,7B).

In still other alternative embodiments different heights are used for the sets of pins or protruding elements or corrugations on flange adapter elements. In yet other embodiments the lengths or heights of the pins or protruding elements, or corrugations, vary within the respective sets (not shown), as long as the total length of one another facing, or oppositely disposed, pins, protruding elements or corrugations corresponds to a length required for the desired stop band. Such different arrangements of protruding elements are disclosed in the European patent application "Waveguide and transmission lines in gaps between parallel conducting surfaces", EP15186666.2, filed on 24 September 2015 by the same Applicant, which shows a microwave device which comprises two conducting layers arranged with a gap there between, wherein each of the layer comprises a set of complementary protruding elements, arranged in a periodic or quasi-periodic pattern and connected thereto, and which sets in combination for a texture for stopping wave propagation in a frequency band of operation in other directions than along intended waveguiding paths. When the lengths of the protruding elements are the same, and the full length of the texture being formed by two protruding elements arranged on each a conducting layer, the length of a protruding element hence corresponding to half the length of the full-length of the protruding elements of the texture.

Generally, throughout the application, the length of a full-length protruding element is approximately between λ/4 and λ/2, and the height of a so called half-length element, is substantially between λ/8 and λ/4, λ being the wavelength in free space or a dielectric media.

The flange adapter element 100B₁ further comprises pairwise oppositely directed wing sections 175B, 175B, 176B, 176B extending in four directions from the central portion 170B which here has a substantially octagonal cross-sectional shape. Each wing section 175B,175B,176B,176B is provided with a screw hole 102B adapted to receive an interconnecting screw 12B with a magnetic head (or screw head with a magnetic element as also discussed above) 13B (see Fig.7B) for connection to a waveguide flange (Fig.7A), and, via the magnetic head 13B, releasable interconnection with another magnetic head (or screw head with a magnetic element) 23B of a screw 22B connecting the second, or other, flange adapter element 100B₂ to the second waveguide flange 20B. The thickness of the wing sections is such that, together with the height of the head of the interconnecting screw 12B, the length or the height of the protruding elements 115B is slightly exceeded, leaving a slight air gap between one another facing protruding elements 115B on the respective flange adapter element 100B₁, 100B₂.

The air gap is smaller than λ/4, and the height of the protruding elements 115B, here half-length elements, is e.g. substantially λ/8.

Fig.6B is a top, or front, view of the flange adapter element 100B₁ shown in Fig.1 illustrating the wall thicknesses d₁,d₂ of the long rim or ridge section 151B.

Fig.6C is a side view in cross-section of the flange adapter element 100B₁ shown in Fig.1.

In alternative embodiments the opposite pairs of protruding wing or flange sections have shapes as disclosed with reference to Fig.1, with the difference that they have to be thinner for half-height protruding elements, or be adapted depending on the lengths of cooperating protruding elements together forming a full-height protruding element, such as to leave room for magnetic screw heads, while keeping a slight gap between the protruding elements on two for the interconnection cooperating flange adapter elements.

Fig.7A illustrates two waveguide flanges 10B,20B interconnected by means of two flange adapter elements 100B₁,100B₂ as discussed with reference to Figs.6A-6C. Since the different elements and parts have already been discussed above, they will not be further discussed with reference to Fig.7A. The distance between the flange gap adapters, the air gap, may e.g. be about 100 µm.

Fig. 7B is a view in perspective showing the two waveguide flanges 10B,20B to which each a flange adapter element 100B₁, 100B₂ is connected by means of the screws 12B,22B in a position for being interconnected through the magnetic heads 13B,23B or magnetic elements or portions on the screw heads 12B,22B as discussed above.

Fig.7C is a schematic side view showing the two waveguide flanges 10B,20B to which each a flange adapter element 100B₁,100B₂ is connected by means of the screws 12B,22B in the position for being interconnected through the magnetic attraction between magnetic heads 13B,23B as shown in Fig.7B.

Fig.7D is a schematic cross-sectional side view showing the two waveguide flanges 10B,20B to which each a flange adapter element 100B₁, 100B₂ is connected by means of the screws 12B,22B in an interconnected state as in Fig.7A illustrating the gap 30B between the periodic or quasi-periodic structures 15B,15B of the flange adapter elements 100B₁, 100B₂.

A particular advantage with the use of half-height protruding elements is that only one type of flange or flange adapter element is needed instead of two different types involved in an interconnection, as e.g. in the case of a textured flange adapter element, as a separate element or fixed to, or forming part of, a waveguide flange, or a flange with such a texture, and a waveguide flange with a smooth surface. Thus gender-less flange adapter elements or waveguide flanges can be provided.

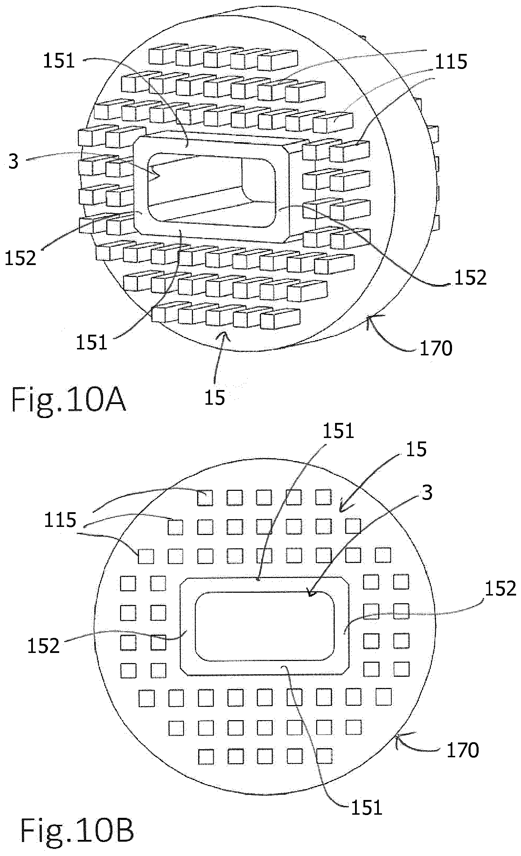

It should also be clear that the pattern of the textured surface, of the protruding elements forming the periodic or quasi-periodic structure, can be different, e.g. as shown with reference to Fig.1, or the structure of the embodiment in Fig.1 may be as shown in Fig.6A etc. Any variation is possible, and will be further discussed with reference to Figs. 10A-14B below.

The flange adapter element 100B preferably comprises a solid part made of brass, Cu, Al or any other appropriate material with a good conductivity, a low resistivity and an appropriate density. It may for example be plated with e.g. Au or Ag in environments where further corrosion protection is needed. It should be clear that also other materials can be used, e.g. any appropriate alloy, or a plastic/polymer compound plated with e.g. Cu, Au or Ag.

Fig.8A is a perspective view of a waveguide structure interconnecting arrangement 100C according to still another embodiment and comprising a flange adapter element 100C.

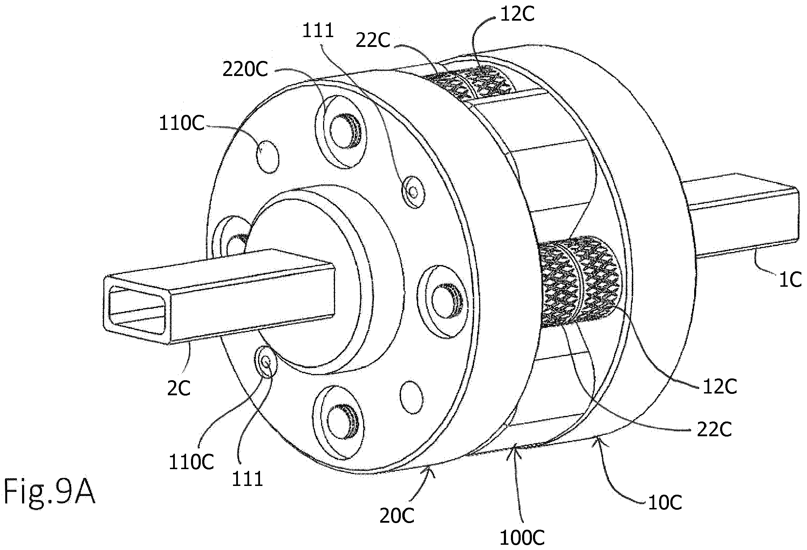

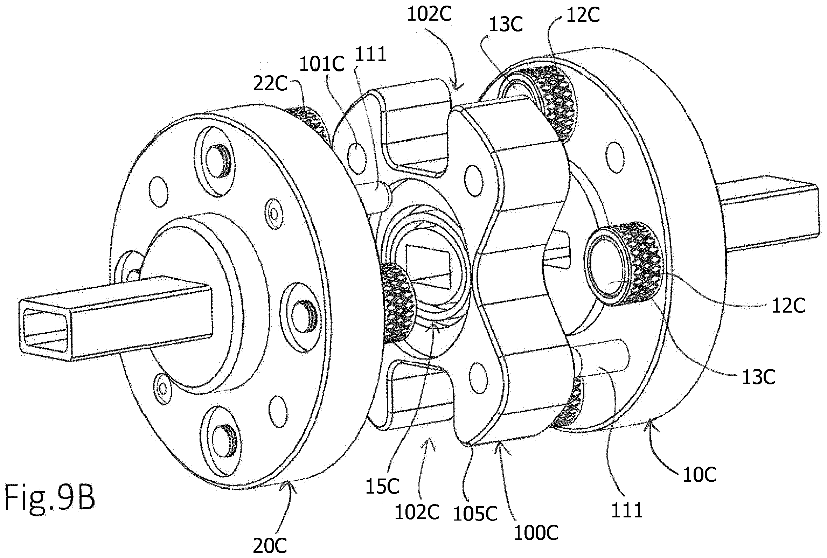

Similar to the embodiment described with reference to Fig.1, the flange adapter element 100C is adapted to be disposed between two waveguide flanges 10C,20C (see Figs.9A,9B). The flange adapter element 100C comprises a textured surface 15C, here with a number of protruding elements comprising a number of grooves and ridges 115C, e.g. two or three, or in some cases more, elliptically disposed around the waveguide opening 3C on a conductive surface to form a periodic or quasi-periodic structure on one side of the flange adapter element 100C. The depth of the grooves 115C' is about λ/4 for a full-height implementation as shown in Fig 8A for interconnection with a waveguide flange with a smooth surface, and about λ/8 for half-height implementations as described with reference to Figs.6A-7D but formed by a texture comprising elliptically arranged grooves (not shown).

The flange adapter element 100C is adapted to provide an interconnection or joint between two waveguide structures with conventional smooth waveguide flanges 10C,20C (see Figs.9A,9B). A protective or supporting element, e.g. a rim, 105C is arranged to surround the periodic or quasiperiodic structure 15C, i.e. the textured surface, and it acts as a protection of the protruding ridges between the grooves and can be said to act as a distance element assuring that, when interconnecting or fastening elements press the textured surface 15C against a waveguide flange with which it is to be interconnected, the pressure will be exerted on said protective, solid, surface, and the protruding elements, ridges, 115C between the grooves will be protected, as well as the interconnecting smooth flange surface. Since the protective or supporting element 105C is arranged to protrude a slight distance beyond the outer ends of the protruding elements, here the tops of the ridges, the presence of a gap will be assured, and the textured surface does not come into direct contact with the opposing waveguide flange 20C (Fig.9A,9B) when fastened or interconnected.

The flange adapter element 100C comprises a number of alignment pin receiving holes 101C; in the shown embodiment four, which are provided in a respective wing or flange section protruding from a central section 170C of the flange adapter element 100C where the textured surface 15C is located, in directions perpendicular to the direction of extension of the protruding elements 115C. The alignment pin receiving holes 101C serve the purpose of being adapted for receiving alignment pins (cf. e.g. Fig.9B) of waveguide flanges which are to be interconnected such as to assure that the waveguide flanges 10C,20C and the flange adapter element 100C are appropriately aligned, and allowing sliding.

Between two respective, opposite, pairs of protruding wing or flange sections, through recesses, here, waists 103C are formed by flange adapter side walls, perpendicular to the textured surface 15C, tapering towards a central region outside the textured surface 15C on a respective side thereof disposed outside the waveguide opening 3C short or narrow side walls. Between two respective, opposite, pairs of protruding wings or flange sections through recesses 102C are formed by flange adapter side walls perpendicular to the textured surface 15C, which recesses are substantially U-shaped with a substantially straight section interconnecting the legs of the U and located outside the textured surface 15C at locations extending substantially in parallel with the long, wide, sides of the waveguide opening 3C. The waist shaped recesses 103C and the U-shaped recesses 102C are so shaped, and have such dimensions, as to allow a fastening element 12C , or a head thereof, (cf. Fig. 9B) to be connected to the surface of a respective waveguide flange 10C, e.g. a standard waveguide flange, whereas the circumferential side walls of the wing or flange sections flange adapter element 100 are so shaped and have such dimensions as to correspond to the circumferential, peripheral, side walls of the respective waveguide flanges 10C,20C. The positions of the waists and U-shaped recesses 102C, 103C are preferably so chosen that they correspond to locations where fastening screw holes are located for standard waveguide flanges.

Fig.8B is a top view of the flange adapter element 100C of Fig.8A, the elements of which already have been discussed above.

Fig.9A shows the flange adapter element 100C disposed between two waveguide flanges 10C,20C and in which the latter are interconnected thereby and through interconnecting screws 12C,22C with magnetic heads 13C,23C or with magnetic elements on the heads. Fig.9A is similar to Fig.3C but for a flange adapter element as in Figs.8A,8B and hence with reference numerals as in Figs 8A,8B, with reference to which also all elements have been discussed above.

Fig.9B illustrates the two waveguide flanges 10C,20C in a position for being interconnected by means of the flange adapter element 100C, and with the interconnecting elements, screws 12C,22C introduced into the screw holes 120C,220C of the first and second waveguide flanges 10C,20C. When the waveguide flanges 10C,20C with the screws with magnetic heads 13C,23C introduced into the screw holes are brought into contact with the flange adapter element 100C, such that the screw heads 13C,23C are positioned in the through recess sections, i.e. here the U-shaped recesses and the waist sections, they will be automatically interconnected by means of the magnetic attraction between the magnetic screw heads 13C,23C. By means of the alignment pins 111C the positioning will be accurate. Thus, interconnection takes place in an easy manner, like a snap-on operation. Although screws may still needed, they can e.g. easily be applied or introduced into the screw holes of the waveguide flanges 10C,20C on beforehand as also referred to above with respect to the embodiment shown in Figs. 1-4. There is also no need to tighten any screws. Once the screws with magnetic heads, or magnetic elements on the heads, have been applied to the waveguide flanges, and they are brought in position on opposite sides of a flange adapter element 100C, the interconnection will take place in an almost automatic manner without requiring any particular skill of the personnel handling the assembly. Thereby interconnection, joining, removal, replacement of waveguide structures, or waveguide flanges, is considerably facilitated and can be done in an easy and fast manner, with a high accuracy and without needing to apply strong forces resulting in the risk of ruining the textured or smooth flange surfaces. The height of the screw head have already been discussed with reference to the embodiments presented in Figs. 1-4, and the same conditions apply for embodiments with other textured surfaces, such as a corrugated structure, a structure with elliptic grooves etc. as also referred to above. Other examples are structures corresponding to embodiments as disclosed in Figs.5A,5B, with a flange adapter element structure adapted for being fixedly connected to a waveguide flange, or be formed as a waveguide flange itself, or arranged for interconnection with another flange adapter element in which case both flange adapter elements are provided with half-height protruding elements of any kind, or, with protruding elements of such lengths as to in a cooperating pair, form a full-height protruding element, but with a gap between them.

In the following some different textured surfaces and surrounding rim or ridge sections will be described, applicable to any waveguide flange adapter element or waveguide flange etc.

Fig.10A shows the central portion or structure 170 with a textured surface 15 of a flange adapter element as in Fig.1 but here for a back-to-back flange adapter element; the functioning of the periodic or quasi-periodic structure however being the same irrespectively of it being a back-to-back implementation or a single-sided implementation. The textured surface, or the periodic or quasi-periodic structure, 15 here comprising pins 115 arranged for interconnection with an opposed smooth flange surface located such that there is a small air gap there between preventing waves from propagating in the gap between the surfaces. The condition for the stopband is imposed by the height of the pins 115, which may be around λ/4, λ being the wavelength in the media surrounding the pins, which is normally free space, but can also be a dielectric media.

The pins 115 can be thick or thin. Thick pins are preferable from a manufacturing point of view. A larger pin thickness to pin height ratio makes the production easier. However, standard flanges have a fixed size, so that there is a limited space to fit the pins in, and each row of pins introduces an attenuation for the waves preventing them from leaking out. Therefore, thin pins are preferable for a better performance of the flange, that is, for having less leakage. The inventive concept covers the use of thick as well as thin pins, or other protruding elements which are thick or thin.

As also mentioned with reference to Fig.1, the rim or ridge 151,152 around the waveguide 3 opening is important for the electrical performance of the waveguide flange, and the dimensions therefore should not be selected arbitrarily. Also fabrication aspects need to be considered. E. Pucci, P.-S. Kildal, "Contactless Non-Leaking waveguide flange Realized by Bed of Nails for millimeter wave Applications", 6th European Conference on Antennas and Propagation (EUCAP), pp.3533-3536, Prague, March 2012, as also referred to in the state of the art section, discloses the use of a ridge around the waveguide opening. This ridge has the same height as the pins have, and is much thicker along the wide side of the waveguide opening, and is referred to as an "Impedance Transformer". This thickness is about λ_{g}/4, and it transforms an open circuit in a short circuit at the waveguide opening, in such way that the waves "see" a metal wall or electric contact even if physically there is a gap between the flanges where the waves could come in. A similar textured structure is used in some embodiments e.g. with a difference that there is one more, shorter, row of pins outside the outermost row on the wide sides of the waveguide opening and that the walls of the short rims or ridges 152 are somewhat thicker.

In Fig. 10B a top, or front, view of the textured structure 15 is shown.

The designs presented by Pucci et.al showed to not be suitable to be produced at 60 GHz. One of the designs of the ridge is a rectangular rim with a thickness of λ_{g}/4 along the wide walls of the waveguide opening, and has a thickness of only 50 µm or even less along the narrow walls of the waveguide opening. Such a thickness is not appropriate from a manufacturing point of view. If on the other hand the thickness is increased, then it is not possible to cover the whole V-band of standard flanges (from 50 GHz to 75 GHz), which is a very wide band. This is due to a resonance appearing within the band.

Another design of a ridge around the waveguide opening is a circular rim that was used for a 200-300 GHz flange described in In S. Rahiminejad, E. Pucci, V. Vassilev, P.-S. Kildal, S. Haasl, P. Enoksson, "Polymer Gap adapter for contactless, Robust, and fast Measurements at 220-325 GHz", Journal of Microelectromechanical Systems, Vol.25, No.1, February 2016, as also referred to above, which however is also not suitable for a V-band flange where the dimensions of pins and ridges are electrically larger in terms of wavelength. The size of the flange is fixed and limited, so there is basically no room to fit pins in the flange if a circular design for the ridge around the waveguide opening is adopted.

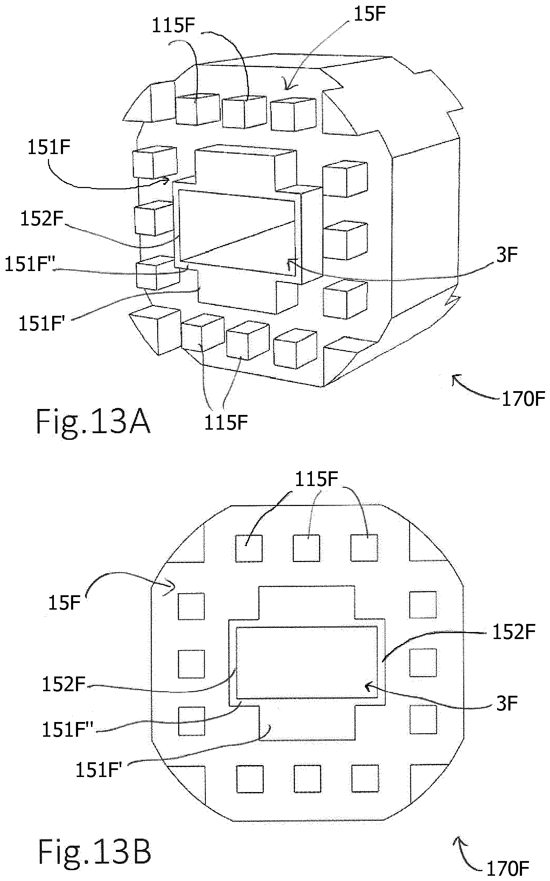

In Fig.1 1 another embodiment of a central portion or structure 170D with a textured surface 15D comprising a number of protruding elements 115D is disclosed. It has been realized that the long ridge or rim 151D also is important for stopping waves from propagating through the gap, and even makes it possible to reduce the number of rows of pins (or more generally protruding elements) needed for the design to even only one (see Figs.13A-13B). In the shown embodiment there are however two rows of pins 115D. The rectangular rim or ridge 151D,152D around the waveguide 3D opening is modified in order to cover a larger frequency band, e.g. in some implementations the whole frequency band from 50 GHz to 75 GHz, although the invention of course not is limited thereto, but it may be adapted to cover any appropriate or desired frequency band. Advantageously the rims or ridges 152D on the narrow or short sides of the waveguide have a sufficient thickness to allow easy manufacture, e.g. between about 200-400 µm, preferably less than 400 µm. The rims or ridges 151D along the wide or long sides of the waveguide opening are divided into different sections, a central ridge section, also denoted a platform 151D', which has a thickness D2 of about λ_{g}/4, and outer narrower ridge sections 15 ID" with a thickness D2'. Thus, the central ridge section or platform 151D' does not have to extend all along the full length of the wide side of the waveguide opening.

The length L or extension of the central ridge section or platform 151D' can be optimized to give a good performance in terms of leakage within the frequency band of interest, in some embodiments e.g. 50-75 GHz. It has also been realized that there is a relation between the thickness of the rim or ridge 152D along the narrow side of the waveguide opening and the length of the ridge or platform 151D'. The larger the thickness of the short side rim or ridge 152D, the shorter the length L of the central ridge section, platform, 151D'.

For exemplifying reasons only, and by no means for limiting purposes, some exemplary dimensions are given for some different embodiments for a 60 GHz flange adapter element. In one embodiment thick pins are used having e.g. a diameter of about 670 µm, and a height of about 1110 µm (full height). The wall thickness may e.g. be 200 µm in H-plane (thickness of walls of short ridge section 152D and outer ridge sections, 151"), and λ_{g}/4 in E-plane, corresponding to the thickness of the wall of the central ridge section 151D'. The air gap may be about 100 µm and the flange may have a total thickness of about 6.6 mm.

In one embodiment for a 60 GHz flange adapter element thin pins are used having e.g. a diameter of about 400 µm. The wall thickness may e.g. be 200 µm in H-plane (thickness of walls of short ridge section 152D and outer ridge sections, 151"), and λ_{g}/4 in E-plane, corresponding to the thickness of the wall of the central ridge section 151D'. The air gap may be about 100 µm and the flange may have a total thickness of about 6.6 mm.

In still another embodiment for a 60 GHz flange adapter element thin pins are used having e.g. a diameter of about 400 µm and a wall thickness of about 300 µm in H-plane is used (thickness of walls of short ridge section 152D and outer ridge sections, 151"), and λ_{g}/4 in E-plane, corresponding to the thickness of the wall of the central ridge section 151D'. The air gap may be about 100 µm and the flange may have a total thickness of about 6.8 mm.

Fig.12 shows a central section or structure 170E with a textured surface and a waveguide surrounding rim or ridge structure as in Fig.11 in a back-to-back implementation, i.e. with the same periodic or quasi-periodic structures on both sides around the waveguide openings. Similar elements bear the same reference numerals as in Fig.11 but indexed "E" and will therefore not be further discussed herein.

Fig.13A shows another embodiment of a central portion or structure 170F with a textured surface 15F comprising a number of protruding elements 115F. As discussed above with reference to Fig.11, through the realisation that the long ridge or rim 151F also is important for stopping waves from propagating through the gap, implementations with but one row of protruding elements 115F on each side of the waveguide opening are advantageous, one example of which is shown in Fig.13A. The rectangular rims or ridges 151F,152F around the waveguide 3F opening are modified in order to cover a larger frequency band, e.g. in some implementations the whole frequency band from 50 GHz to 75 GHz, although the invention of course not is limited thereto, but it may be adapted to cover any appropriate or desired frequency band. Advantageously the rims or ridges 152F on the narrow or short sides of the waveguide have a sufficient thickness to allow easy manufacture, e.g. between about 200-400 µm, preferably less than 400 µm. The rims or ridges 151F along the wide or long sides of the waveguide opening are divided into different sections, a central ridge section, also denoted a platform, 151F' which has a thickness of about λ_{g}/4, and outer narrower ridge sections 151F". The central ridge section or platform 151F' does not extend all along the full length of the wide side of the waveguide 3F opening.

The length L or extension of the central ridge section or platform 151F' can be optimized to have a good performance in terms of leakage within the frequency band of interest, in some embodiments e.g. 50-75 GHz. As also referred to above, there is a relation between the thickness of the rim or ridge 152F along the narrow side of the waveguide opening and the length of the ridge or platform 151F' provided on the wide side. The larger the thickness of the short side rim or ridge 152F, the shorter the length L of the central ridge section, platform, 151F' and vice versa. Fig.13B is a top view of the central section 170F of Fig.13A shown merely for illustrative purposes.

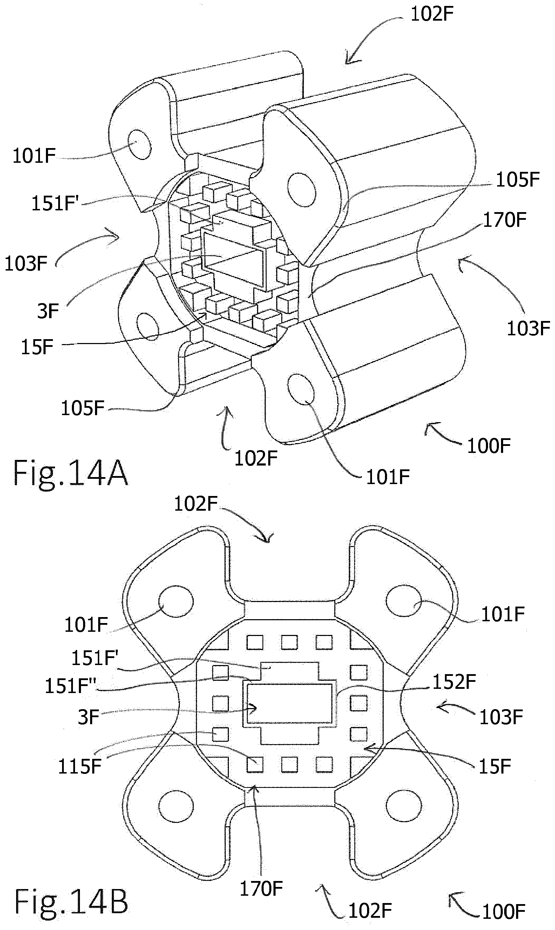

Fig.14A shows an embodiment of a flange adapter element comprising a central section or structure 170F as in Fig.13A, which therefore will not be further discussed herein, and which is provided with an outer protective or supporting section or element, e.g. a rim, 105F (see also reference numeral 105 in Fig.1) which is disposed such as to surround the periodic or quasiperiodic structure 15F, i.e. the textured surface. The shape of the outer protective or supporting section or element, e.g. a rim or similar, 105F is not important for the electrical performance, but it is important to provide a support or a contact surface when two flanges are connected together, to protect the flange surfaces (smooth or textured) from damage. It also contributes in providing a fixed gap between flanges, since the height of such an the outer protective or supporting section or element, rim, 105F is equal to the height of the protruding elements 151F plus the gap for full-height protruding element structures, and the height of the protruding elements plus half the gap for half-height protruding element structures, or correspondingly if different heights are used for the protruding elements.

As for the embodiment described with reference to Fig.1, the flange adapter element 100F comprises wings or protruding sections in which alignment pin holes 101F are provided, and between recesses, e.g. comprising U-shaped recesses 102F and waists 103F, are provided such as to leave space for fastening elements, e.g. screws, with magnetic heads or magnetic portions attached to the heads or similar as also discussed earlier in the application, and therefore not will be further described here.

Fig.14B is a top view of the flange adapter element 100F of Fig.14A shown merely for illustrative purposes.

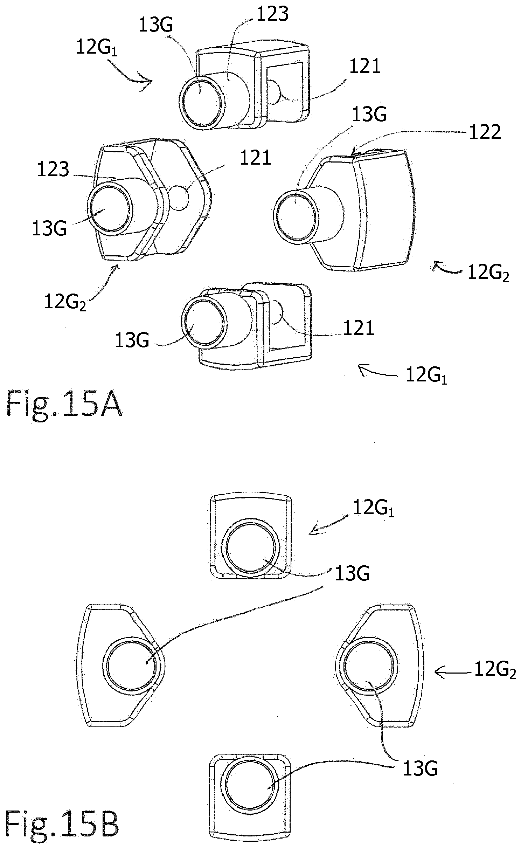

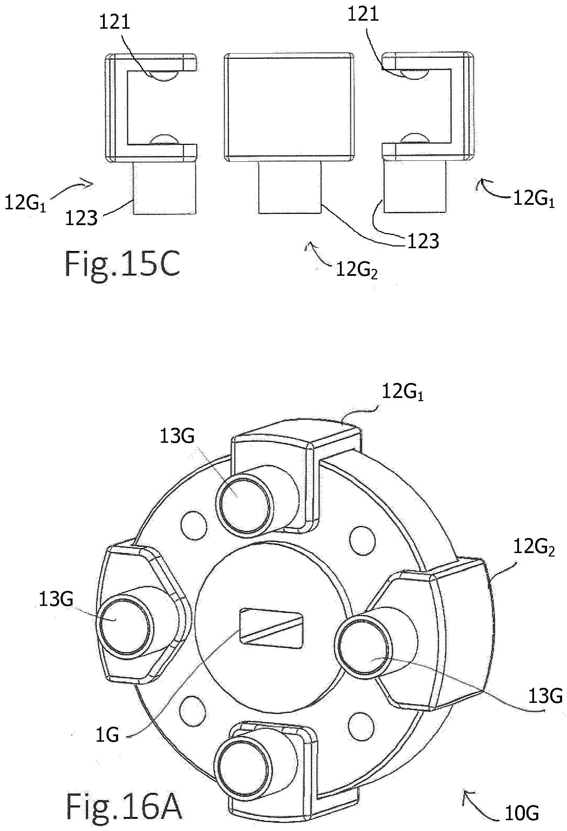

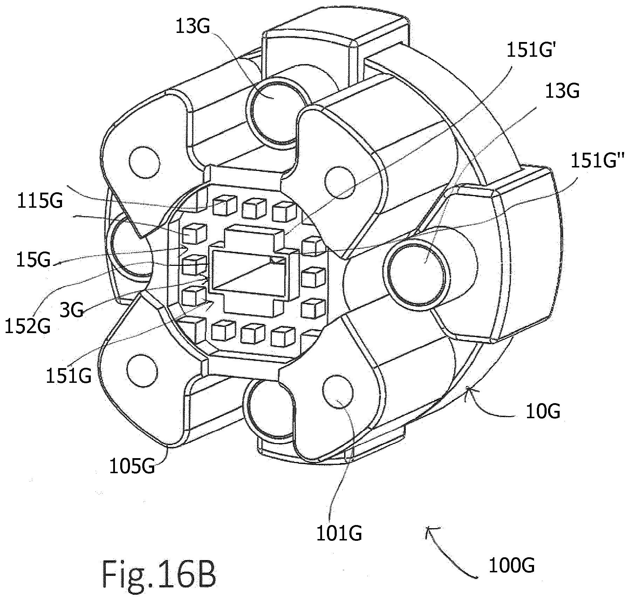

In Fig.15A a set of alternative interconnecting elements 12G₁, 12G₁, 12G₂, 12G₂ is illustrated. Top and side views are shown in Figs. 15B, 15C. The use of such interconnecting elements, or fastening elements, is particular advantageous in overcoming problems with flange adapter elements having different depths or thicknesses, and when magnetic elements should be fastened to already existing or fabricated screws. The solution here comprises the use of a fastening system comprising, here, four separate interconnecting elements also serving as fasteners. They have a shape adapted to the shape of a flange adapter element as described earlier in the application; a particular implementation is shown in Fig.16B. Elements not specific for this embodiment are not described in detail since the have already been described with reference to preceding embodiments, and like elements are given the same reference numerals but referenced "G".

Here two different (and mirrored) shapes of interconnecting (or fastening) elements are used, first interconnecting elements 12G₁, also called top/bottom fasteners, and second interconnecting elements 12G₂, also called side fasteners. Thereby the semantic look is increased and the risk of incorrect mounting is reduced. Except for the outer shape, the design of the interconnecting elements 12G₁, 12G₂ is similar. In one embodiment they have a shell-shaped configuration 122 adapted to the shape e.g. of a WR15-flange. Internally they are provided with dome-shaped protrusions 121 adapted to allow connection to existing screw holes of the waveguide flange. On the front side cylindrical casings 123 are provided for reception of permanent magnet elements 13G, e.g. 3x2 mm neodymium magnets.

The interconnecting elements 12G₁, 12G₁, 12G₂,12G₂ can easily be applied to a waveguide flange 10G, e.g. a WR15-flange by snapping them into place towards the centre of the flange 10G as shown in fig.16A. The dome-shaped protrusions 121 and the radial shell shape 122 ensure that the interconnecting elements are fixed in place or position. Once the interconnecting elements 12G₁, 12G₁, 12G₂,12G₂ have been applied onto the waveguide flange 10G, a flange gap adapter element 100G can be mounted using alignment pins as described e.g. with reference to Figs. 3A,3B. The shapes of the interconnecting elements and the alignment pins ensure that the flange adapter element 100G will not be mounted incorrectly. By mounting four interconnecting elements or fasteners to an interconnecting waveguide flange (not shown) as shown in Fig.16A, the interconnection will be completed by aligning the waveguide flange onto the flange adapter element 100G, where it will be held in place by means of magnetic elements as described earlier in the application. Preferably the interconnecting elements are attached to the waveguide flange before the flange adapter element 100G in order to avoid damage to the flange adapter element, although it is not a requirement. For detachment of the interconnecting elements, they are simply pulled from the centre of the flange and drawn outwards. In advantageous embodiments the interconnecting elements 12G₁, 12G₁, 12G₂,12G₂ are made of plastic to provide for good elastic properties for mounting and detachment purposes. In other embodiments they are made of metal. They may then, are also, be attached by means of screws from the backside of the waveguide flange.

The interconnecting elements may e.g. be fabricated by means of jet moulding or liquid injection moulding. Of course also other fabrication methods are possible as well.

It should be clear that the invention is not limited to the illustrated embodiments but that it can be varied in a large number of ways, and features of the different embodiments can be freely combined. Particularly the periodic or quasi-periodic structures, textures, can be of many different kinds, i.e. the type, shape and size and arrangement of protruding elements, and the dimensions be scaled for different frequency bands, some figures are e.g. given for 60 GHz implementations as far as dimensions of protruding elements, thicknesses of ridge sections around the waveguide opening etc. are concerned. It should also be clear that a flange adapter element can be implemented as a separate part allowing releasable connection to waveguide flanges, guided and slidable by means of alignment pins, or comprise a waveguide flange itself, or be adapted for fixed connection to a waveguide flange. Flange adapter elements may also be provided as back-to-back flange adapter elements or single sided elements. Still further, interconnecting elements may comprise magnetic screw heads, or magnets connected to screw heads by means of gluing or similar, or magnetic elements attached to other interconnecting elements, as well as magnetic elements may be fastened on, or to, waveguide flanges or, particularly for flange adapter elements to be connected fixedly to a waveguide flange, or a flange support element (see e.g. reference numeral 145A in Fig.5A) by gluing e.g. in small recesses or cavities or externally on the surface. Also the shapes and sizes of the wing sections, or the intermediate recesses admitting room for interconnecting elements (e.g. screws with magnetic elements), can be varied in different manners, only some exemplifying embodiments being shown. It is also possible to use other fastening elements than screws with magnets, or magnets as such. Particular implementations refer to flange adapter elements with a surrounding protective or supporting rim as such, independently of type of interconnecting elements.

In some embodiments the textured surface, i.e. the periodic or quasi-periodic structure, comprises a number of square shaped pins, with cross-sectional area dimension of (0.15λ)² and a height of 0.15-0.25λ, surrounding a waveguide opening. It may also comprise a corrugated structure with a plurality of concentrically or elliptically disposed corrugations with grooves surrounding a waveguide opening.

As referred to above, the width, or cross-sectional dimension/the height of the pins or corrugations of any appropriate kind is determined by the desired frequency band. The higher the frequency band, the smaller the dimensions, and the dimensions scale linearly with the wavelength; the higher the frequency, the smaller the wavelength, and the smaller the dimensions. For a frequency band, by wavelength is here meant the wavelength of the centre frequency of the corresponding frequency band.

It is an advantage of the invention that, when magnetic interconnecting elements are used, a flange adapter element can be easily connected, loosened and reused in many different flange connections. It is also an advantage, that when e.g. magnetic elements are used, connection and release is much faster than if other fastening mechanisms are used.

The concepts of the present invention are also applicable to circular waveguides.

The concepts are also applicable to waveguide flanges which are not circular, but e.g. rectangular.

It particularly can be used for connecting a microwave or millimetre wave tool or instrument to a microwave or millimetre circuit or device, or a device under test (DUT) or a calibration arrangement for a tool or instrument for analysing or measuring microwave or millimetre circuits or devices. With a microwave instrument is here also meant devices for frequencies up to and above THz frequency.

It is an advantage that a waveguide interconnection arrangement is provided which facilitates interconnection using existing standard waveguide flanges.

The waveguide structure interconnecting arrangement further is compact and easy to assemble and reassemble-

It is also a particular advantage that the presence of a gap, enables relative displacement between the surfaces e.g. two textured surfaces or a textured surface and a smooth surface, which is of advantage in some implementations, e.g. during calibration procedures etc. when a flange needs to be moved.

It should be noted that the gap between surfaces is described as a gap, in some cases it may be substantially zero gap, the main point being that there is no requirement for any electrical contact between the two surfaces.

## Claims

1. An arrangement (100;100A;100B;100C;100D;100E;100F;100G) for interconnection of waveguide structures or components (10,20;10A,20A;10B,20B;10C,20C;10D,20D; 10E,20E;10F,20F;20G) comprising a waveguide flange adapter element (100;100A;100B1,100B2;100C;100F;100G) comprising a surface of a conductive material with a waveguide opening and a periodic or quasi-periodic structure (15;15A;15B;15C;15D;15E;15F15G) formed by a number of protruding elements (115;115A;115B1,115B2;115C;115D;115E;115F;115G) arranged around said waveguide opening, the protruding elements arranged or designed to allow waves to pass through said waveguide opening in a desired direction or waveguide path, at least in an intended frequency band of operation, and to stop propagation of waves in other directions,
wherein it comprises interconnecting means allowing interconnection with a waveguide flange or another waveguide flange adapter element without requiring electrical or conductive contact,
wherein the interconnecting means comprise a rim or ridge (105;105A;105C;105G) at least partly surrounding the surface (15;15A;15B1,15B2;15C;15D;15E;15F;15G) formed by the periodically or quasi-periodically arranged protruding elements (115;115A; 115B1;115B2;115C;115D;115E;115F;115G), **characterized in that**
the rim or ridge is arranged to protrude beyond outer ends of the protruding elements, hence assuring that the surface (15;15A;15B1;15C;15D;15E;15F;15G) formed by the periodically or quasi-periodically arranged protruding elements (115;115A;115B 1; 115B2;115C;115D;115E;115F;115G) do not come in direct mechanical contact with an opposite, interconnecting, waveguide flange (20;20A;20C) or waveguide flange adapter element (10B₂).

2. An arrangement (100;100B1,100B2;100C;100F;100G) for interconnection of waveguide structures or components according to claim 1,
**characterized in that** the arrangement comprises at least one separate, loose, waveguide flange adapter element adapted to be releasably disposed between two waveguide flanges (10,20; 10B,20B;10C,20C;10F,20F) to be interconnected.

3. An arrangement (100;100A;100C;100F;100G) for interconnection of waveguide structures or components according to claim 2,
**characterized in**
**that** the at least one waveguide flange adapter element comprises alignment pin holes (101;101A;101C;101F) substantially symmetrically disposed around, and at a distance from, the surface (15;15A;15B1,15B2;15C;15D;15E;15F;15G) formed by periodically or quasi-periodically arranged protruding elements (115;115A; 115C;115D;115E;115F;115G), and in that the at least one waveguide flange adapter is arranged to be aligned with respect to interconnecting waveguide flange or flanges by means of alignment pins (111) introduced into the alignment pin holes (101;101A;101C;101F;101G) of the waveguide flange adapter element and into cooperating pin holes in the interconnecting waveguide flanges (10,20;10C,20C;10F,20F;10G).

4. An arrangement (100;100A;100B;100C;100D;100E;100F,100G) for interconnection of waveguide structures or components according to claim 2 or 3,
**characterized in**
**that** the waveguide flange adapter element is adapted to be fixedly or releasably connectable to a waveguide flange, or to be releasably connected to, or interposed between, two waveguide flanges, and in that the waveguide flange adapter element is slidably arranged on alignment pins (111).

5. An arrangement (100;100A;100B;100C;100D;100F;100G) for interconnection of waveguide structures or components according to claim 4,
**characterized in**
**that** the interconnecting means further comprise interconnecting elements, and that the waveguide flange adapter element comprises a number of through recesses (102,103;102A;103A;102C,103C; 102F;103F) or protruding sections or wing portions (175B,176B) allowing reception of the interconnecting elements (12; 12A; 12B; 12C; 12G₁, 12G₂) or portions thereof, or interconnecting elements (13A;13G) being connected to at least one interconnecting waveguide flange, and in that said interconnecting elements comprise magnetic elements or magnetic portions (13;13A;13B;13C;13F;13G) adapted for cooperating with magnetic elements of the other interconnecting waveguide flange or with magnetic elements or magnetic portions (23;23A;23B;23C;23F) of interconnecting elements (22;22A; 22B;22C;22F) of the other interconnecting waveguide flange (10;10A;10B;10C;10F;10G), at least some of the interconnecting elements comprising fastening elements, e.g. screws (12;12A;12B;12C;) with magnetic heads or with magnetic elements (13;13A;13B;13C) fixedly or releasably connectable thereto, or clamping elements or clip, snap-on, elements (12G₁, 12G₂), and that, when the waveguide flange adapter element is interposed and aligned between two waveguide flanges, the waveguide flanges are interconnected, and the waveguide flange adapter element is clamped or held there between.

6. An arrangement (100;100A;100B;100C;100F;100G) for interconnection of waveguide structures or components at least according to claim 4, **characterized in that** the waveguide flange adapter element is adapted to interconnect two waveguide flanges with smooth, non-textured surfaces and **in that** one or each textured surface faces one of the smooth waveguide flange surfaces such that a gap (30;30B) being less than λ/4, λ being the wavelength in the media surrounding the protruding elements, which is free space but can also be a dielectric media, is provided between a textured surface and a smooth waveguide flange surface.

7. An arrangement (100A;100B) for interconnection of waveguide structures or components at least according to any one of claims 1-5,
**characterized in**
**that** the waveguide flange adapter element is adapted to be connected or fastened to a smooth, non-textured, waveguide flange (10A;10B;20B) by means of fastening elements (17), e.g. screws, or glued onto a waveguide flange (10A;10B.20B), such that the textured surface (15A,15B1,15B2) faces away from the waveguide flange (10A;10B;20B) to which it is fastened.

8. An arrangement (100B) for interconnection of waveguide structures or components according to any one of the preceding claims,
**characterized in**
**that** the arrangement
comprises two waveguide flange adapter elements (100B₁,100B₂) each comprising a surface of a conductive material with a periodic or quasi-periodic structure (15B,15B) formed by a number of protruding elements (115B), and in that the protruding elements of the two surfaces are arranged to be complementary, e.g. such that each protruding element of a first set of protruding elements faces a protruding element of a second set of protruding elements, and have each such a height or length that the total height or length of two corresponding elements of each a surface form a full length of the periodic or quasi-periodic structure needed to stop propagation of waves, each waveguide flange adapter element (100B₁,100B₂) being adapted to be fixedly or releasably connected to a respective waveguide flange (10B,20B), or wherein the waveguide flange adapter element forms a waveguide flange.

9. An arrangement (100B) for interconnection of waveguide structures or components according to claim 8,
**characterized in**
**that** each waveguide flange adapter element (100B₁,100B₂) comprises four protruding sections or wing sections (175B,175B,176B,176B) disposed around the respective textured surface (15B) and each comprising a hole (102B) adapted for reception of an interconnecting element (12B,22B).

10. An arrangement (100;100A;100B;100C;100D;100E;100F;100G) for interconnection of waveguide structures or components according to any one of the preceding claims,
**characterized in**
**that** the side or surface of the waveguide flange adapter element comprising the periodic or quasi-periodic structure (15;15A;15B;15C;15D;15E;15F;15G) of the protruding elements disposed around the waveguide opening of the waveguide flange adapter element, is optimized to provide a good performance, i.e. a low reflection coefficient and a high transmission coefficient between two joining, interconnecting, waveguide structures, and that the protruding elements (115;115A; 115D;115E;115F;115G) have a height of between substantially λ/4- λ/2 for full-height protruding elements, i.e. when the waveguide flange adapter element with the periodic or quasi-periodic structure is to be interconnected with a waveguide flange with a smooth conductive surface, or between λ/8-λ/4 for non-full height protruding elements (115B), i.e. when the waveguide flange adapter element with the periodic or quasi-periodic structure is to be interconnected with another waveguide flange element with a periodic or quasi-periodic structure, λ being the wavelength in the media surrounding the protruding elements, which is free space but can also be a dielectric media.

11. An arrangement (100;,100A;100B;100C;100F,100G) for interconnection of waveguide structures or components at least according to claim 10,
**characterized in**
**that** the arrangement comprises frame sections provided on long sides and short sides of the waveguide opening, said frame sections comprising long rim or ridge sections (151;151D;151F;151G) and short or narrow rim or ridge sections (152;152D;152F;152G) arranged to surround wide and narrow sides of the waveguide opening (3;3B;3C;3D;3E;3F;3G).

12. An arrangement (100;100A;100B;100C;100F;100G) for interconnection of waveguide structures or components according to claim ,
**characterized in**
**that** the wall thickness of the long or wide rim or ridge sections is about λ_{g}/4, λ_{g} being the wavelength in the waveguide.

13. An arrangement for interconnection of waveguide structures or components according to any one of the preceding claims,
**characterized in**
**that** the protruding elements (115;115A;115B;115C; 115D;115E;115F;115G) of the periodic or quasi-periodic structure are arranged in one to four, or more, particularly one to three, rows around the waveguide opening, there e.g. being different number of protruding elements in different rows.

14. An arrangement (100;100A;100B;100C;100F;100G) according to any one of the preceding claims,
**characterized in**
**that** the arrangement is adapted to be used for releasable interconnection of existing, e.g. standard, waveguide flanges.

## Patentansprüche

1. Anordnung (100; 100A; 100B; 100C; 100D; 100E; 100F; 100G) für die Verbindung von Wellenleiterstrukturen oder -komponenten (10, 20; 10A, 20A; 10B, 20B; 10C, 20C; 10D, 20D; 10E, 20E; 10F, 20F; 20G), aufweisend ein Wellenleiterflanschadapterelement (100; 100A; 100B1, 100B2; 100C; 100F; 100G), das eine Fläche eines leitfähigen Materials mit einer Wellenleiteröffnung und einer periodischen oder quasiperiodischen Struktur (15; 15A; 15B; 15C; 15D; 15E; 15F; 15G) aufweist, die durch eine Anzahl vorspringender Elemente (115; 115A; 115B1, 115B2; 115C; 115D; 115E; 115F; 115G) gebildet ist, die um die Wellenleiteröffnung herum angeordnet sind, wobei die vorspringenden Elemente angeordnet oder designt sind, um Wellen, mindestens auf einem vorgesehenen Frequenzband des Betriebs, in einer gewünschten Richtung oder einem Wellenleiterpfad durch die Wellenleiteröffnung gelangen zu lassen und die Wellenausbreitung in anderen Richtungen zu unterbrechen,
wobei sie Verbindungsmittel aufweist, die eine Verbindung mit einem Wellenleiterflansch oder einem anderen Wellenleiterflanschadapterelement erlauben, ohne elektrischen oder leitfähigen Kontakt zu verlangen,
wobei die Verbindungsmittel einen Rand oder Kamm (105; 105A; 105C; 105G) aufweisen, der mindestens teilweise die Fläche (15; 15A; 15B1, 15B2; 15C; 15D; 15E; 15F; 15G) umschließt, die durch die periodisch oder quasiperiodisch angeordneten vorspringenden Elemente (115; 115A; 115B1; 115B2; 115C; 115D; 115E; 115F; 115G) gebildet ist,
**dadurch gekennzeichnet, dass** der Rand oder Kamm angeordnet ist, um über äußere Enden der vorspringenden Elemente hinauszustehen, und damit sicherzustellen, dass die Fläche (15; 15A; 15B1; 15C; 15D; 15E; 15F; 15G), die durch die periodisch oder quasiperiodisch angeordneten vorspringenden Elemente (115; 115A; 115B1; 115B2; 115C; 115D; 115E; 115F; 115G) gebildet ist, nicht mit einem entgegengesetzten Verbindungswellenleiterflansch (20; 20A; 20C) oder einem Wellenleiterflanschadapterelement (10B₂) in direkten mechanischen Kontakt kommt.

2. Anordnung (100; 100B1, 100B2; 100C; 100F; 100G) zur Verbindung von Wellenleiterstrukturen oder -komponenten nach Anspruch 1,
**dadurch gekennzeichnet, dass** die Anordnung mindestens ein separates, loses Wellenleiterflanschadapterelement aufweist, das angepasst ist, trennbar zwischen zwei Wellenleiterflanschen (10, 20; 10B, 20B; 10C, 20C; 10F, 20F) angeordnet zu sein, die verbunden werden sollen.

3. Anordnung (100; 100A; 100C; 100F; 100G) zur Verbindung von Wellenleiterstrukturen oder -komponenten nach Anspruch 2,
**dadurch gekennzeichnet, dass** das mindestens eine Wellenleiterflanschadapterelement Ausrichtungsstiftlöcher (101; 101A; 101C; 101F) aufweist, die im Wesentlichen symmetrisch um und in einem Abstand von der Fläche (15; 15A; 15B1, 15B2; 15C; 15D; 15E; 15F; 15G) angeordnet sind, die durch periodisch oder quasiperiodisch angeordnete vorspringende Elemente (115; 115A; 115C; 115D; 115E; 115F; 115G) gebildet ist, und dass der mindestens eine Wellenleiterflanschadapter angeordnet ist, mittels Ausrichtungsstiften (111), die in die Ausrichtungsstiftlöcher (101; 101A; 101C; 101F; 101G) des Wellenleiterflanschadapterelements und in kooperierende Stiftlöcher in den Verbindungswellenleiterflanschen (10, 20; 10C, 20C; 10F, 20F; 10G) eingeführt sind, in Bezug auf einen oder mehrere Verbindungswellenleiterflansche ausgerichtet zu sein.

4. Anordnung (100; 100A; 100B; 100C; 100D; 100E; 100F, 100G) zur Verbindung von Wellenleiterstrukturen oder -komponenten nach Anspruch 2 oder 3,
**dadurch gekennzeichnet, dass** das Wellenleiterflanschadapterelement angepasst ist, fest oder trennbar mit einem Wellenleiterflansch verbindbar zu sein oder trennbar mit zwei Wellenleiterflanschen verbunden oder dazwischen eingesetzt zu sein, und dass das Wellenleiterflanschadapterelement schiebbar auf Ausrichtungsstiften (111) angeordnet ist.

5. Anordnung (100; 100A; 100B; 100C; 100D; 100F; 100G) zur Verbindung von Wellenleiterstrukturen oder -komponenten nach Anspruch 4,
**dadurch gekennzeichnet, dass** die Verbindungsmittel ferner Verbindungselemente aufweisen und dass das Wellenleiterflanschadapterelement eine Anzahl von Durchgangsausschnitten (102, 103; 102A; 103A; 102C, 103C; 102F; 103F) oder vorspringenden Abschnitten oder Flügelabschnitten (175B, 176B) aufweist, die die Aufnahme der Verbindungselemente (12; 12A; 12B; 12C; 12G₁, 12G₂) oder von Abschnitten davon, oder der Verbindungselemente (13A; 13G), die mit mindestens einem Verbindungswellenleiterflansch verbunden sind, zulassen, und dass die Verbindungselemente magnetische Elemente oder magnetische Abschnitte (13; 13A; 13B; 13C; 13F; 13G) aufweisen, die angepasst sind, mit magnetischen Elementen des anderen Verbindungswellenleiterflanschs oder mit magnetischen Elementen oder magnetischen Abschnitten (23; 23A; 23B; 23C; 23F) von Verbindungselementen (22; 22A; 22B; 22C; 22F) des anderen Verbindungswellenleiterflanschs (10; 10A; 10B; 10C; 10F; 10G) zu kooperieren, wobei mindestens einige der Verbindungselemente Befestigungselemente, wie etwa Schrauben (12; 12A; 12B; 12C; ) mit magnetischen Köpfen oder mit magnetischen Elementen (13; 13A; 13B; 13C), die fest oder trennbar damit verbindbar sind, oder Klemmelemente oder Clip-, Schnapp-, Elemente (12G₁, 12G₂) aufweisen, und dass, wenn das Wellenleiterflanschadapterelement zwischen zwei Wellenleiterflanschen eingesetzt und angeordnet ist, die Wellenleiterflansche verbunden sind und das Wellenleiterflanschadapterelement dazwischen geklemmt oder gehalten wird.

6. Anordnung (100; 100A; 100B; 100C; 100F; 100G) zur Verbindung von Wellenleiterstrukturen oder -komponenten mindestens nach Anspruch 4,
**dadurch gekennzeichnet, dass** das Wellenleiterflanschadapterelement angepasst ist, zwei Wellenleiterflansche mit glatten, nicht texturierten Flächen zu verbinden, und dass eine oder jede texturierte Fläche zu der glatten Wellenleiterflanschflächen weist, sodass eine Lücke (30; 30B), die kleiner als λ/4 ist, wobei λ die Wellenlänge in dem Medium ist, das die vorspringenden Elemente umschließt, wobei es sich um freien Raum handelt, das jedoch auch ein Dielektrikum sein kann, zwischen einer texturierten Fläche und einer glatten Wellenleiterflanschfläche bereitgestellt wird.

7. Anordnung (100A; 100B) zur Verbindung von Wellenleiterstrukturen oder -komponenten mindestens nach einem der Ansprüche 1 bis 5,
**dadurch gekennzeichnet, dass** das Wellenleiterflanschadapterelement angepasst ist, mit einem glatten, nicht texturierten Wellenleiterflansch (10A; 10B; 20B) mittels Befestigungselementen (17), wie etwa Schrauben, verbunden oder daran befestigt zu werden, oder an einen Wellenleiterflansch (10A; 10B; 20B) geklebt zu werden, sodass die texturierte Fläche (15A, 15B1, 15B2) von dem Wellenleiterflansch (10A; 10B; 20B) weg weist, an dem sie befestigt ist.

8. Anordnung (100B) zur Verbindung von Wellenleiterstrukturen oder -komponenten nach einem der vorhergehenden Ansprüche,
**dadurch gekennzeichnet, dass** die Anordnung zwei Wellenleiterflanschadapterelemente (100B₁, 100B₂) aufweist, die jeweils eine Fläche eines leitfähigen Materials mit einer periodischen oder quasiperiodischen Struktur (15B, 15B) aufweisen, die durch eine Anzahl vorspringender Elemente (115B) gebildet ist, und dass die vorspringenden Elemente der beiden Flächen angeordnet sind, komplementär zu sein, z. B. sodass jedes vorspringende Element eines ersten Satzes vorspringender Elemente zu einem vorspringenden Element eines zweiten Satzes vorspringender Elemente weist, und je eine solche Höhe oder Länge aufweisen, dass die gesamte Höhe oder Länge von zwei entsprechenden Elementen jeder Fläche eine volle Länge der periodischen oder quasiperiodischen Struktur bilden, die erforderlich ist, um die Wellenausbreitung zu unterbrechen, wobei jedes Wellenleiterflanschadapterelement (100B₁, 100B₂) angepasst ist, fest oder trennbar mit einem jeweiligen Wellenleiterflansch (10B, 20B) verbunden zu sein, oder wobei das Wellenleiterflanschadapterelement einen Wellenleiterflansch bildet.

9. Anordnung (100B) zur Verbindung von Wellenleiterstrukturen oder -komponenten nach Anspruch 8,
**dadurch gekennzeichnet, dass** jedes Wellenleiterflanschadapterelement (100B₁, 100B₂) vier vorspringende Abschnitte oder Flügelabschnitte (175B, 175B, 176B, 176B) aufweist, die um die jeweilige texturierte Fläche (15B) herum angeordnet sind, und die jeweils ein Loch (102B) aufweisen, das zur Aufnahme eines Verbindungselements (12B, 22B) angepasst ist.

10. Anordnung (100; 100A; 100B; 100C; 100D; 100E; 100F; 100G) zur Verbindung von Wellenleiterstrukturen oder -komponenten nach einem der vorhergehenden Ansprüche,
**dadurch gekennzeichnet, dass** die Seite oder Fläche des Wellenleiterflanschadapterelements, das die periodische oder quasiperiodische Struktur (15; 15A; 15B; 15C; 15D; 15E; 15F; 15G) der vorspringenden Elemente aufweist, die um die Wellenleiteröffnung des Wellenleiterflanschadapterelements herum angeordnet sind, optimiert ist, um eine gute Leistung bereitzustellen, d. h. einen geringen Reflexionsfaktor zwischen zwei zusammenlaufenden, sich verbindenden Wellenleiterstrukturen, und dass die vorspringenden Elemente (115; 115A; 115D; 115E; 115F; 115G) eine Höhe zwischen im Wesentlichen λ/4- λ/2 für vorspringende Elemente voller Höhe, d. h. wenn das Wellenleiterflanschadapterelement mit der periodischen oder quasiperiodischen Struktur mit einem Wellenleiterflansch mit einer glatten leitfähigen Fläche verbunden sein soll, oder zwischen λ/8- λ/4 für vorspringenden Elemente (115B), die nicht die volle Höhe aufweisen, d. h. wenn das Wellenleiterflanschadapterelement mit der periodischen oder quasiperiodischen Struktur mit einem anderen Wellenleiterflanschelement mit einer periodischen oder quasiperiodischen Struktur verbunden sein soll, aufweisen, wobei λ die Wellenlänge in dem Medium ist, das die vorspringenden Elemente umschließt, das freier Raum ist, aber auch ein Dielektrikum sein kann.

11. Anordnung (100; 100A; 100B; 100C; 100F; 100G) zur Verbindung von Wellenleiterstrukturen oder -komponenten mindestens nach Anspruch 10,
**dadurch gekennzeichnet, dass** die Anordnung Rahmenabschnitte aufweist, die an langen Seiten und kurzen Seiten der Wellenleiteröffnung bereitgestellt sind, wobei die Rahmenabschnitte lange Rand- oder Kammabschnitte (151; 151D; 151F; 151G) und kurze oder schmale Rand- oder Kammabschnitte (152; 152D; 152F; 152G) aufweisen, die angeordnet sind, um breite und schmale Seiten der Wellenleiteröffnung (3; 3B; 3C; 3D; 3E; 3F; 3G) zu umschließen.

12. Anordnung (100; 100A; 100B; 100C; 100F; 100G) zur Verbindung von Wellenleiterstrukturen oder -komponenten nach Anspruch 11,
**dadurch gekennzeichnet, dass** die Wanddicke der langen oder breiten Rand- oder Kammabschnitte etwa λg/4 beträgt, wobei λg die Wellenlänge in dem Wellenleiter ist.

13. Anordnung zur Verbindung von Wellenleiterstrukturen oder -komponenten nach einem der vorhergehenden Ansprüche,
**dadurch gekennzeichnet, dass** die vorspringenden Elemente (115; 115A; 115B; 115C; 115D; 115E; 115F; 115G) der periodischen oder quasiperiodischen Struktur in einer bis vier oder mehr, insbesondere einer bis drei, Reihen um die Wellenleiteröffnung angeordnet sind, wobei es z. B. in verschiedenen Reihen verschiedene Anzahlen vorspringender Elemente gibt.

14. Anordnung (100; 100A; 100B; 100C; 100F; 100G) nach einem der vorhergehenden Ansprüche,
**dadurch gekennzeichnet, dass** die Anordnung angepasst ist, zur trennbaren Verbindung bestehender, z. B. standardmäßiger, Wellenleiterflansche verwendet zu werden.

## Revendications

1. Agencement (100; 100A, 100B; 100C; 100E; 100F ; 100G) pour l'interconnexion de structures ou de composants de guide d'ondes (10, 20 ; 10A, 20A; 10B, 20B ; 10C, 20C ; 10D, 20D ; 10E, 20E ; 10F, 20F ; 20G) comprenant un élément d'adaptateur de bride de guide d'onde (100; 100A; 100B1, 100B2 ; 100C; 100F ; 100G) comprenant une surface d'un matériau conducteur avec une ouverture de guide d'onde et une structure périodique ou quasi-périodique (15 ; 15A ; 15B ; 15C ; 15D; 15E ; 15F; 15G) formé par un certain nombre d'éléments saillants (115 ; 115A, 115B ; 115C ; 115D ; 115E; 115F ; 115G) disposées autour de ladite ouverture de guide d'ondes, les éléments saillants étant agencés ou conçus pour permettre aux ondes de passer à travers ladite ouverture de guide d'ondes dans une direction ou un trajet de guide d'ondes souhaité, au moins dans une bande de fréquence de fonctionnement prévue, et pour arrêter la propagation des ondes dans d'autres directions,
dans lequel il comprend des moyens d'interconnexion permettant l'interconnexion avec une bride de guide d'ondes ou un autre élément d'adaptateur de bride de guide d'ondes sans nécessiter de contact électrique ou conducteur,
dans lequel les moyens d'interconnexion comprennent un rebord ou une nervure (105; 105A ; 105C; 105G) entourant au moins partiellement la surface (15 ; 15A ; 15B1, 15B2 ; 15C ; 15D ; 15E ; 15F ; 15G) formée par un ou des éléments saillant disposés périodiquement ou quasi-périodiquement (115; 115A ; 115B1 ; 115B2 ; 115C ; 115D ; 115E ; 115F ; 115G),
**caractérisé en ce que** le rebord ou la nervure est agencé pour faire saillie au-delà des extrémités extérieures des éléments saillants, garantissant ainsi que la surface (15 ; 15A; 15B1 ; 15C ; 15D ; 15E ; 15F ; 15G) formée par les éléments saillants agencés périodiquement ou quasi-périodiquement (115; 115A ; 115B1 ; 115B2 ; 115C; 115D; 115E; 115F; 115G) n'entrent pas en contact mécanique direct avec une bride de guide d'ondes d'interconnexion opposée (20 ; 20A; 20C) ou un élément d'adaptateur de bride de guide d'ondes (10B₂).

2. Agencement (100 ; 100B1, 100B2 ; 100C ; 100F ; 100G) pour l'interconnexion de structures ou de composants de guides d'ondes selon la revendication 1,
**caractérisé en ce que** l'agencement comprend au moins un élément d'adaptateur de bride de guide d'ondes séparé, lâche, adapté pour être disposé de manière amovible entre deux brides de guide d'ondes (10, 20 ; 10B, 20B; 10C, 20C ; 10F, 20F) pour être interconnecté.

3. Agencement (100 ; 100A; 100C ; 100F; 100G) pour l'interconnexion des structures ou composants de guides d'ondes selon la revendication 2,
**caractérisé en ce que** le au moins un élément d'adaptateur de bride de guide d'ondes comprend des trous de broche d'alignement (101; 101A; 101C ; 101F) disposés de manière sensiblement symétrique autour et à une distance de la surface formée(15 ; 15A; 15B1, 15B2 ; 15C ; 15D ; 15E ; 15F; 15G) par des éléments saillant disposés périodiquement ou quasi-périodiquement (115; 115A; 115B; 115C ; 115D ; 115E; 115F ; 115G) et **en ce que** au moins un adaptateur de bride de guide d'ondes est agencé pour être aligné par rapport à la bride ou aux brides de guide d'ondes d'interconnexion au moyen de broches d'alignement (111) introduites dans les trous de broche d'alignement (101 ; 101A ; 101C ; 101F ; 101G) de l'élément d'adaptateur de bride de guide d'ondes et dans des trous de broche coopérants dans les brides de guide d'ondes d'interconnexion (10, 20 ; 10C, 20C ; 10F, 20F ; 10G).

4. Arrangement (100 ; 100A ; 100B ; 100C ; 100D ; 100E ; 100F ; 100G) pour l'interconnexion de structures ou de composants de guides d'ondes selon la revendication 2 ou 3,
**caractérisé en ce que** l'élément d'adaptateur de bride de guide d'ondes est adapté pour être connecté de manière fixe ou amovible à une bride de guide d'ondes, ou pour être connecté de manière amovible à, ou interposé entre, deux brides de guide d'ondes, et **en ce que** l'élément d'adaptateur de bride de guide d'ondes est agencé de manière coulissante sur des broches d'alignement (111).

5. Arrangement (100 ; 100A ; 100B ; 100C ; 100D ; 100F ; 100G) pour l'interconnexion de structures ou de composants de guides d'ondes selon la revendication 4,
caractérisé en que les moyens d'interconnexion comprennent en outre des éléments d'interconnexion, et en ce que l'élément d'adaptateur de bride de guide d'ondes comprend un certain nombre d'évidements traversants (102, 103 ; 102A ; 103A ; 102C, 103C ; 102F ; 103F) ou de sections saillantes ou de parties d'aile (175B, 176B) permettant la réception des éléments d'interconnexion (12 ; 12A ; 12B ; 12C ; 12G₁, 12G₂) ou des parties de ceux-ci, ou des éléments d'interconnexion (13A ; 13G) étant connecté à au moins une bride de guide d'ondes d'interconnexion, et en ce que lesdits éléments d'interconnexion comprennent des éléments magnétiques ou des parties magnétiques (13 ; 13A ; 13B ; 13C ; 13F ; 13G) adaptés pour coopérer avec des éléments magnétiques de l'autre bride de guide d'onde d'interconnexion ou avec des éléments magnétiques ou des parties magnétiques (23 ; 23A ; 23B ; 23C ; 23F) d'éléments d'interconnexion (22 ; 22A ; 22B ; 22C ; 22F) de l'autre bride de guide d'ondes d'interconnexion (10 ; 10A ; 10B ; 10C ; 10F ; 10G), au moins certains des éléments d'interconnexion comprenant des éléments de fixation, par ex. des vis (12 ; 12A ; 12B ; 12C ) à têtes magnétiques ou à éléments magnétiques (13 ; 13A ; 13B ; 13C) pouvant y être reliés de manière fixe ou amovible, ou des éléments de serrage ou des éléments clipsables, encliquetables (12G₁, 12G₂), et que, lorsque l'élément d'adaptateur de bride de guide d'ondes est interposé et aligné entre deux brides de guide d'ondes, les brides de guides d'ondes sont interconnectées, et l'élément d'adaptateur de bride de guide d'ondes est serré ou maintenu entre eux.

6. Agencement (100 ; 100A ; 100B ; 100C ; 100F ; 100G) pour l'interconnexion de structures ou de composants de guides d'ondes au moins selon la revendication 4,
**caractérisé en ce que** l'élément d'adaptateur de bride de guide d'ondes est adapté pour interconnecter deux brides de guide d'ondes avec des surfaces lisses non texturées et **en ce qu'**une ou chaque surface texturée fait face à l'une des surfaces de bride de guide d'ondes lisses de telle sorte qu'un espace (30 ; 30B) étant inférieur à λ/4, λ étant la longueur d'onde dans le milieu entourant les éléments saillants, qui est un espace libre mais peut également être un milieu diélectrique, est prévu entre une surface texturée et une surface de bride de guide d'ondes lisse.

7. Agencement (100A ; 100B) pour l'interconnexion des structures ou de composants de guides d'ondes selon au moins une quelconque des revendications 1 à 5,
**caractérisé en ce que** l'élément d'adaptateur de bride de guide d'ondes est adapté pour être connecté ou fixé à une bride de guide d'ondes lisse, non texturée (10A ; 10B ; 20B) au moyen d'éléments de fixation (17), par ex. vissée ou collée sur une bride de guide d'ondes (10A ; 10B ; 20B), de sorte que la surface texturée (15A, 15B1, 15B2) soit tournée à l'opposé de la bride de guide d'ondes (10A ; 10B ; 20B) à laquelle elle est fixée

8. Agencement (100B) pour l'interconnexion de structures ou de composants de guides d'ondes selon une quelconque des revendications précédentes,
**caractérisé en ce que** l'agencement comprend deux éléments d'adaptateurs de bride de guide d'ondes (100B₁, 100B₂) comprenant chacun une surface d'un matériau conducteur à structure périodique ou quasi-périodique (15B, 15B) formée par plusieurs éléments saillants (115B), et **en ce que** les éléments saillants des deux surfaces sont agencés pour être complémentaires, par ex. de sorte que chaque élément saillant d'un premier ensemble d'éléments saillant fasse face à un élément saillant d'un deuxième ensemble d'éléments saillants, et possèdent chacun une hauteur ou longueur telle que la hauteur ou longueur totale de deux éléments correspondants de chacune d'une surface forme une longueur totale de la structure périodique ou quasi-périodique nécessaire pour arrêter la propagation des ondes, chaque élément d'adaptateur de bride de guide d'ondes (100B₁ 100B₂) étant adapté pour être connecté de manière fixe ou amovible à une bride de guide d'ondes respective (10B, 20B), ou dans lequel l'élément d'adaptateur de bride de guide d'ondes forme une bride de guide d'ondes.

9. Agencement (100B) d'interconnexion de structures ou de composants de guides d'ondes selon la revendication 8,
**caractérisé en ce que** chaque élément d'adaptateur de bride de guide d'ondes (100B₁, 100B₂) comprend quatre sections saillantes ou sections d'ailes (175B, 175B, 176B, 176B) disposés autour de la surface texturée respective (15B) et comprenant chacun un trou (102B) adapté pour recevoir un élément d'interconnexion (12B, 22B) .

10. Agencement (100 ; 100A ; 100B ; 100C ; 100D, 100E ; 100F, 100G) pour l'interconnexion de structures ou de composants de guides d'ondes selon une quelconque des revendications précédentes,
**caractérisé en ce que** le côté ou la surface de l'élément d'adaptateur de bride de guide d'ondes comprenant la structure périodique ou quasi-périodique (15 ; 15A ; 15B ; 15C ; 15D ; 15E ; 15F ; 15G) des éléments saillants disposés autour de l'ouverture l'élément d'adaptateur de bride de guide d'ondes est optimisé pour fournir une bonne performance, c'est-à-dire un faible coefficient de réflexion et un coefficient de transmission élevé entre deux structures de guide d'ondes se joignant, s'interconnectant, et que les éléments saillants (115 ; 115A ; 115D ; 115E ; 115F ; 115G) ont une hauteur sensiblement comprise entre λ/4-λ/2 pour les éléments saillants à pleine hauteur, c'est-à-dire lorsque l'élément d'adaptateur de bride de guide d'ondes avec la structure périodique ou quasi-périodique doit être interconnecté avec une bride de guide d'ondes avec une surface conductrice lisse, ou entre λ8-λ4 pour les éléments saillant à non pleine hauteur (115B), c'est-à-dire lorsque l'élément d'adaptateur de bride de guide d'ondes avec la structure périodique ou quasi-périodique doit être interconnecté avec un autre élément de bride de guide d'ondes avec une structure périodique ou quasi-périodique, λ étant la longueur d'onde dans le milieu entourant les éléments saillants, qui est un espace libre mais peut également être un milieu diélectrique.

11. Agencement (100 ; 100A ; 100B ; 100C ; 100F ; 100G) pour l'interconnexion de structures ou de composants de guides d'ondes au moins selon la revendication 10,
**caractérisé en ce que** l'agencement comprend des sections de cadre disposées sur les côtés longs et les côtés courts de l'ouverture du guide d'ondes, lesdites sections de cadre comprenant de longues sections de rebord ou de nervure (151 ; 151D ; 151F ; 151G) et des sections de rebord ou de nervure courtes ou étroites (152 ; 1521D; 152F ; 152G) agencées pour entourer les côtés larges et étroits de l'ouverture du guide d'ondes.

12. Agencement 100 ; 100A ; 100B ; 100C ; 100F ; 100G) pour l'interconnexion de structures ou de composants de guides d'ondes selon la revendication 11,
**caractérisé en ce que** l'épaisseur de paroi des sections de rebord ou de nervure longues ou larges est d'environ λ_{g/}4, λ_{g} étant la longueur d'onde dans le guide d'ondes.

13. Agencement pour l'interconnexion de structures ou de composants de guides d'ondes selon une quelconque des revendications précédentes,
**caractérisé en ce que** les éléments saillants (115 ; 115A ; 115B ; 115C ; 115D ; 115E, 115F ; 115G) de la structure périodique ou quasi-périodique sont agencées en une à quatre, ou plus, en particulier une à trois, rangées autour de l'ouverture du guide d'ondes, là par ex. étant un nombre différent d'éléments saillants dans différentes rangées.

14. Agencement (100 ; 100A, 100B ; 100C ; 100F, 100G) selon une quelconque des revendications précédentes,
**caractérisé en ce que** l'agencement est adapté pour être utilisé pour une interconnexion libérable d'existants, par ex. des brides de guide d'ondes standard.
